# EUROPEAN PATENT APPLICATION

(11) **EP 4 520 414 A2**
(43) Date of publication of application: **12.03.2025**
(21) Application number: 24198427.7
(22) Date of filing: 04.09.2024
(51) Int. Cl.: A63H 33/00

(54) **A COMPACT MOBILE TOY, A CONNECTOR FOR A COMPACT MOBILE TOY AND KIT COMPRISING A COMPACT MOBILE TOY AND A CONNECTOR**

(30) Priority: 05.09.2023 IL 30573223
(71) Applicant: Doona Holdings Ltd., Quarry Barry (HK)
(72) Inventor: MAZAR, Yoav, Quarry Bay (HK)
(74) Representative: Mewburn Ellis LLP

(57) **Abstract**

A toy kit comprising a toy mobile having a body, a connector for suspending thereby the toy mobile from a target, and a coupler for facilitating coupling between the toy mobile and the connector, the toy mobile and the connector at least when assembled constituting a toy assembly. The toy mobile comprises a connector coupling member fixed to the coupler at a first portion of the coupler. The connector comprises a target engaging component detachably and securely attachable to a target so as to have the toy mobile suspend from the target by means of the connector, and a toy coupling member fixed to the coupler at a second portion of the coupler. The toy assembly comprises a first rotation interface between the body and the connector coupling member and a second rotation interface between the connector coupling member and the toy coupling member selectively allowing relative rotation therebetween. The toy assembly comprises a rotation restriction mechanism for selectively restricting the relative rotation between the connector coupling member and the toy coupling member at the second rotation interface, the first rotation interface allowing a relative rotation between the body and the connector coupling member at least when the relative rotation between the connector coupling member and the toy coupling member is restricted at the second rotation interface.

## Description

### TECHNOLOGICAL FIELD

This invention relates generally to a compact mobile toy suspendable from a target, a connector to suspend the mobile toy from a target, and a toy kit including a mobile toy and a connector.

### BACKGROUND

Mobile toys of the kind, to which the presently disclosed subject matter refers, are generally provided to be suspended in a field of a child with one or more toys connected thereto, for the child to playfully interact therewith. Such mobile toys are necessarily required to be compact, safe, and secure with respect to both their suspension and their operation. The mechanism used for suspending such mobile toys should be, from the perspective of the child, secure and, from the perspective of parents, easy to suspend. Furthermore, the operation or functioning of the mobile toys needs to be safe for the interaction of the child even if the child interferes with such functioning.

### GENERAL DESCRIPTION

The presently disclosed subject matter is directed to different aspects of a mobile toy, allowing it to be suspended from a target which can generally be a frame of a child cradle, crib, stroller, a child car, or any equivalent equipment for carrying a child, whereas the frame can include any support bar, hook arrangement, or any equivalent designated portion for suspending therefrom a mobile toy in a field of view of the child.

Some aspects of the presently disclosed subject matter are directed to allow the safe exploitation and proper functioning of the mobile toy even if a child interferes with such functioning, and other aspects are directed to a compact design of the mobile toy.

In accordance with one aspect of the presently disclosed subject matter there is provided a toy mobile configured to be used with a connector for suspending thereby the toy mobile from a target by means of a coupler for facilitating coupling between the toy mobile and the connector.

The toy mobile can have a connector coupling member fixable to the coupler at a first portion of the coupler, and the connector can comprise a target engaging component detachably and securely attachable to a target so as to have the toy mobile suspend from the target by means of the connector, and a toy coupling member fixable to the coupler at a second portion of the coupler. The coupler can be integrally assembled with at least one of the toy mobile and the connector.

The above toy mobile and the connector, with the coupler integrally assembled with one or both of them, can be sold separately or together whether in a dissembled state or as an toy assembly, and will further be referred to in the present description as a 'kit', because of their being designed to be primarily used as an assembly.

Thus, in accordance the above aspect of the presently disclosed subject matter, there is further provided a toy assembly comprising the above toy mobile, connector and coupler, and further comprising a first rotation interface between the body and the connector coupling member and a second rotation interface between the connector coupling member and the toy coupling member selectively allowing relative rotation therebetween, the first rotation interface allowing a relative rotation between the body and the connector coupling member at least when the relative rotation between the connector coupling member and the toy coupling member is restricted at the second rotation interface.

The provision of the above two rotation interfaces can facilitate the use of the toy assembly in a normal-use state, when the rotation of the toy mobile is allowed as designed and an abnormal-use state in which such rotation is restricted by some external force, which for example, can be a pulling force applied by a child to a toy mobile, at least indirectly.

Further features which the toy mobile, the connector and the toy assembly of this aspect of the presently disclosed subject matter can have, are described in the Embodiments listed further in this General Description, for example, Embodiments 1 to 44 listed below.

According to another aspect of the presently disclosed subject matter, in a toy kit or toy assembly described above or any other toy kit/assembly comprising a toy mobile having a body and a connector for suspending thereby the toy mobile from a target, which can have a normal-use state in which the body of the toy mobile is rotatable about a central axis thereof, and an abnormal-use state in which a force is applied to the toy mobile, at least indirectly, interfering with the rotation of the body of the toy mobile, the following features can be implemented:
- the toy mobile can comprise a normally static component to be static in the normal-use state of the toy assembly, and a connector coupling member statically connected to the normally static component; and
- the connector can comprise:
   ∘ a target engaging component detachably and securely attachable to a target so as to have the toy mobile suspend from the target by means of the connector, and
   o a toy coupling member at least indirectly fixed to the connector coupling member of the toy mobile, the fixation being such as to allow the connector coupling member while staying fixed to the toy coupling member, to rotate together with the normally static component, relative to the toy coupling member in the abnormal-use state of the toy assembly.

Further features which the toy mobile, the connector and the toy assembly of this aspect of the presently disclosed subject matter can have, are described in the Embodiments listed further in this General Description, for example Embodiments 45 to 70 listed below.

According to a still further aspect of the presently disclosed subject matter, there is provided a compact toy mobile, which can be used in a toy kit/toy assembly according to any of the above aspects, being attachable to a target so as to be suspendable therefrom, either by means of a connector described with respect to the above aspects or by any other means. The toy mobile can comprise a body having an upper portion and a lower portion spaced along a central axis of the body in a central reference plane thereof, and at least one arm, said upper portion comprising a target connecting member for the attachment of the body to the target, and said arm having a distal end allowing a toy to be connected thereto, and a proximal end, at which said at least one arm is mounted to said body between the upper and lower portions, said at least one arm being at least partially pivotable between a retracted position, in which said distal end is located at a first distance from said central axis, and an extended position, in which said distal end is located at a second distance from said central axis, which second distance exceeds the first distance, said at least one arm having such shape and orientation relative to the body that, in both positions of the at least one arm, a height of a projection of the arm on the central reference plane is shorter than a distance between the distal and proximal ends of the arm.

The toy mobile of this aspect can be a motorized toy mobile or the rather can be operable manually. The number of arms can be one or more, as desired.

Further features which the toy mobile of this aspect of the presently disclosed subject matter can have, are described in the Embodiments listed further in this General Description, for example Embodiments 71 to 88 listed below.

According to a still further aspect of the presently disclosed subject matter there is provided a compact motorized toy mobile which can be used in a toy kit/toy assembly according to any of the above aspects, being attachable to a target so as to be suspendable therefrom, either by means of a connector described with respect to the above aspects or by any other means. The toy mobile can be operable in a normal-use state in which its body is rotatable about a central axis thereof, and an abnormal-use state in which a force is applied to the toy mobile, at least indirectly, interfering with the rotation of the body of the toy mobile, said toy mobile comprising: an interior space defined by the body of the toy mobile; and a motor having a motor body and a shaft extending at least partially along the central axis, the motor being at least partially disposed within the interior space, one of the motor body and the shaft being at least indirectly statically connected to the body so as to be rotatable together therewith about the other one of the motor body and the shaft during the normal-use state, and the other one of the motor body and the shaft being rotatable with respect to the body during the abnormal-use state.

Further features which the toy mobile of this aspect of the presently disclosed subject matter can have, are described in the Embodiments listed further in this General Description, for example Embodiments 89 to 102 listed below.

According to a still further aspect of the presently disclosed subject matter, there is provided a connector for quick and secure detachable attachment of an external component, to a target. The external component can be, for example, any of the toy mobiles described above with respect to previous aspects of the presently disclosed subject matter or any other toy mobiles or toys. The target can have a trappable portion having a length and two dimensions perpendicular thereto.

The connector of this aspect can comprise:
- a trapping space having a shape and dimensions corresponding to those of the trappable portion, a length shorter than the length of trappable portion and an open end through which the trappable portion can be received in a direction perpendicular to the length of the trapping portion;
- a locking space via which the trapping space is accessible from an exterior of the connector;
- a locking member movable within the locking space between an open position in which access to the trapping space from an exterior of the connector via the locking space is allowed and a closed position in which access to the trapping space from the exterior of the connector via the locking space is blocked;
- a preventing mechanism for restricting access from the trapping space into the locking space when the locking member is in the closed position; and
- an external component engaging portion operable for securely receiving a corresponding portion of the external component.

Further features which the connector of this aspect of the presently disclosed subject matter can have, are described in the Embodiments listed further in this General Description, for example in Embodiments 103 to 133 listed below.

Below are listed the Embodiments of the presently disclosed subject matter referred to above.
1. A toy kit comprising a toy mobile having a body, a connector for suspending thereby the toy mobile from a target, and a coupler for facilitating coupling between the toy mobile and the connector, the toy mobile and the connector at least when assembled constituting a toy assembly, in which:
   - the toy mobile comprises a connector coupling member fixed to the coupler at a first portion of the coupler;
   - the connector comprises a target engaging component detachably and securely attachable to a target so as to have the toy mobile suspend from the target by means of the connector, and a toy coupling member fixed to the coupler at a second portion of the coupler; and
   - the toy assembly comprises a first rotation interface between the body and the connector coupling member and a second rotation interface between the connector coupling member and the toy coupling member selectively allowing relative rotation therebetween, the first rotation interface allowing a relative rotation between the body and the connector coupling member at least when the relative rotation between the connector coupling member and the toy coupling member is restricted at the second rotation interface.
2. The toy kit according to Embodiment 1, wherein the first rotation interface allows a relative rotation between the body and the connector coupling member at least when the relative rotation between the connector coupling member and the toy coupling member is allowed at the second rotation interface.
3. The toy kit according to Embodiment 1 or 2, wherein the toy assembly comprises a rotation restriction mechanism for selectively restricting the relative rotation between the connector coupling member and the toy coupling member at the second rotation interface.
4. The toy kit according to Embodiment 3, wherein at least a first part of the rotation restriction mechanism is associated with the toy coupling member and at least a second part of the rotation restriction mechanism is associated with the connector coupling member.
5. The toy kit according to Embodiment 4, wherein one of the first and second parts of the rotation restriction mechanism comprises a first magnet and the other one of the first and second parts of the rotation restriction mechanism comprises a second magnet or a magnetic material.
6. The toy kit according to Embodiment 5, wherein the first and second parts of the rotation restriction mechanism operate to allow coupling of the connector coupling member with the toy coupling member.
7. The toy kit according to any one of Embodiments 1 to 6, wherein the toy assembly can have a normal-use state in which the body of the toy mobile is rotatable about a central axis thereof, and an abnormal-use state in which a force is applied to the toy mobile, at least indirectly, interfering with the rotation of the body of the toy mobile.
8. The toy kit according to Embodiment 7, when dependent on Embodiment 3, wherein at the normal-use state, the rotation restriction mechanism restricts the relative rotation between the connector coupling member and the toy coupling member at the second rotation interface.
9. The toy kit according to Embodiment 7 or 8, wherein at the normal-use state, the connector coupling member together with the coupler and the toy coupling member remains stationary and the body rotates with respect to the connector coupling member at the first rotation interface.
10. The toy kit according to any one of Embodiments 7 to 9, wherein at the abnormal-use state, the body remains stationary and the connector coupling member together with the coupler rotates with respect to the body at the first rotation interface.
11. The toy kit according to any one of Embodiments 7 to 10, when dependent on Embodiment 3, wherein at the abnormal-use state, the rotation restriction mechanism allows the relative rotation between the connector coupling member and the toy coupling member at the second rotation interface.
12. The toy kit according to any one of Embodiments 1 to 11, wherein upon being assembled into the toy assembly, the coupler has a coupler first portion fixed thereto the toy coupling member and an opposite coupler second portion fixed thereto the connector coupling member.
13. The toy kit according to any one of Embodiments 1 to 12, wherein the coupler is integrally assembled with the connector coupling member.
14. The toy kit according to any one of Embodiments 1 to 13, wherein the coupler is statically connected to the connector coupling member and the second rotation interface lies between the coupler and the toy coupling member.
15. The toy kit according to any one of Embodiments 1 to 12, wherein the coupler is manufactured as a unitary body with the connector coupling member and the second rotation interface lies between the coupler and the toy coupling member.
16. The toy kit according to any one of the preceding Embodiments, wherein the toy mobile comprising a body having an upper portion facing the connector and a lower portion extending downwardly therefrom, the toy mobile is suspended, along a central axis of the body in a central reference plane thereof; and at least one arm having a distal end allowing a toy to be connected thereto, and a proximal end, at which said at least one arm is mounted to said body between the upper and lower portions, said at least one arm being at least partially pivotable between a retracted position, in which said distal end is located at a first distance from said central axis, and an extended position, in which said distal end is located at a second distance from said central axis, which second distance exceeds the first distance, and such shape and orientation relative to the body that, in both positions of the at least one arm, a height of a projection of the arm on the central reference plane is shorter than a distance between the distal and proximal ends of the arm.
17. The toy kit according to Embodiment 16, wherein an outermost point of said upper portion lies in an upper reference plane of the body and an outermost point of said lower portion lines in a lower reference plane of the body, and wherein in both the extended and retracted positions of the arm, at least a majority of the arm is disposed in between said upper and lower reference planes.
18. The toy kit according to Embodiment 17, wherein in both the extended and retracted positions of the at least one arm, the distal end of the arm is disposed above said lower reference plane.
19. The toy kit according to Embodiment 17 or 18, wherein in both the extended and retracted positions of the at least one arm, the distal end of the at least one arm is disposed below said upper reference plane.
20. The toy kit according to any one of Embodiments 16 to 19, wherein the proximal end of the at least one arm is connected to a pivot j oint, and said at least one arm is radially extendable by pivoting about said pivot joint.
21. The toy kit according to any one of Embodiments 16 to 20, wherein the body comprises at least one recess so as to at least partially accommodate the at least one arm when in the retracted position and so as to allow the at least one arm to protrude from the recess along at least a majority of the length of the arm, when in the extended position.
22. The toy kit according to Embodiment 21, wherein the at least one arm is pivotably mounted to the body with its proximal end by means of a pivot joint disposed within the recess and operable to allow pivoting of the at least one arm between the retracted and extended positions.
23. The toy kit according to Embodiment 21 or 22, wherein the at least one recess is elongated along the circumference of the body and has a shape corresponding to that of the at least one arm, allowing to accommodate the arm within the recess at least along a majority of the arm.
24. The toy kit according to any one of Embodiments 21 to 23, wherein the recess has a height along the central axis and a depth perpendicular to the central axis, corresponding to those of the arm so as to be able to accommodate the arm in its entirety when in the retracted position.
25. The toy kit according to any one of Embodiments 16 to 24, wherein the at least one arm is constituted by at least two arms.
26. The toy kit according to Embodiment 25, when dependent on any one of Embodiments 21 to 24, wherein the at least one recess is constituted by at least two recesses each corresponding to one of the at least two arms.
27. The toy kit according to any one of Embodiments 15 to 26, wherein the body has an exterior surface and at least a portion of said exterior surface has a continuously curved shape extending around the central axis.
28. The toy kit according to Embodiment 12, wherein said portion of said exterior surface has a variable or constant diameter about the central axis, along the length of the central axis.
29. The toy kit according to any one of Embodiments 16 to 28, wherein said at least one arm is rotatable about the central axis.
30. The kit according to any one of the preceding Embodiments, wherein the toy mobile is a motorized toy mobile having a body and being operable in a normal-use state in which the body of the toy mobile is rotatable about a central axis thereof, and an abnormal-use state in which a force is applied to the toy mobile, at least indirectly, interfering with the rotation of the body of the toy mobile, said toy mobile comprising:
   - an interior space defined by the body of the toy mobile; and
   - a motor having a motor body and a shaft extending at least partially along the central axis, the motor being at least partially disposed within the interior space, one of the motor body and the shaft being at least indirectly statically connected to the body so as to be rotatable together therewith about the other one of the motor body and the shaft during the normal-use state, and the other one of the motor body and the shaft being rotatable with respect to the body during the abnormal-use state.
31. The toy kit according to Embodiment 30, wherein said other one of the motor body and the shaft being statically connected to the connector coupling member and rotatable therewith during the abnormal-use state.
32. The toy kit according to Embodiment 30 or 31, wherein the motor body is at least indirectly statically connected to the body of the toy mobile and is rotatable together therewith about the shaft during the normal-use state.
33. The toy kit according to Embodiment 32, wherein the shaft is statically connected to the connector coupling member and is rotatable together therewith about the motor body during the abnormal-use state.
34. The toy kit according to any one of the preceding Embodiments, wherein the connector is operable for quick and secure detachable attachment to a target of the toy mobile or any other external component, the target having a trappable portion having a length and two dimensions perpendicular thereto, said connector comprising;
   - a trapping space having a shape and dimensions corresponding to those of the trappable portion, a length shorter than the length of trappable portion and an open end through which the trappable portion can be received in a direction perpendicular to the length of the trapping portion;
   - a locking space via which the trapping space is accessible from an exterior of the connector;
   - a locking member movable within the locking space between an open position in which access to the trapping space from an exterior of the connector via the locking space is allowed and a closed position in which access to the trapping space from the exterior of the connector via the locking space is blocked;
   - a preventing mechanism for restricting access from the trapping space into the locking space when the locking member is in the closed position; and
   - an external component engaging portion operable for securely receiving a corresponding portion of the toy mobile or any other external component.
35. The toy kit according to Embodiment 34, wherein the preventing mechanism comprises a barrier separating the trapping space and the locking space.
36. The toy kit according to Embodiment 35, wherein said barrier is moveable along with the movement of the locking member so as to allow access to the trapping space from the locking space during the open position and so as to restrict access from the trapping space to the locking space during the closed position.
37. The toy kit according to Embodiment 35 or 36, said barrier being at least partially constituted by a protrusion extending from the locking member.
38. The toy kit according to Embodiment 37, wherein said locking space is at least partially defined by an interior wall of the connector, said interior wall comprising a cavity for receiving therewithin the protrusion at the open position of the locking member.
39. The toy kit according to any one of Embodiments 1 to 5, wherein said locking member is constituted by a spring-loaded lever mechanism comprising a target engaging portion having a first surface facing the exterior of the connector, said spring-loaded lever mechanism being biased in a first direction towards the closed position.
40. The toy kit according to Embodiment 39, wherein the locking member is moveable into the open position by pressing against said first surface for introducing the trappable portion of the target into the trapping space.
41. The toy kit according to Embodiment 39 or 40, said spring-loaded lever mechanism further comprising a handle portion being urgeable in a second direction, opposite the first direction, to move the locking member into the open position.
42. The toy kit according to any one of Embodiments 34 to 41, wherein the external component engaging portion is operable for detachably receiving said corresponding portion of the toy mobile or other external component.
43. The toy kit according to Embodiments 42, wherein said external component engaging portion comprises a slot for removably receiving therethrough said corresponding portion, said connector comprising a blocking member to selectively allow and block an access through the slot.
44. The toy kit according to Embodiment 43, when dependent on Embodiment 41, wherein said blocking member is constituted by said handle portion, wherein the access through the slot is allowed during the open position of the locking member and is blocked during the closed position of the locking member.
45. A toy kit comprising a toy mobile having a body and a connector for suspending thereby the toy mobile from a target, the toy mobile and the connector when assembled constituting a toy assembly which can have a normal-use state in which the body of the toy mobile is rotatable about a central axis thereof, and an abnormal-use state in which a force is applied to the toy mobile, at least indirectly, interfering with, by at least partially restricting, the rotation of the body of the toy mobile, wherein at least when the assembly is assembled:
   - the toy mobile comprises a normally static component to be static in the normal-use state of the toy assembly, and a connector coupling member statically connected to the normally static component; and
   - the connector comprises:
      ∘ a target engaging component detachably and securely attachable to a target so as to have the toy mobile suspend from the target by means of the connector, and
      o a toy coupling member at least indirectly fixed to the connector coupling member of the toy mobile, the fixation being such as to allow the connector coupling member while staying fixed to the toy coupling member, to rotate together with the normally static component, relative to the toy coupling member in the abnormal-use state of the toy assembly.
46. The toy kit according to Embodiment 45, the fixation being such as to allow the connector coupling member together with the normally static component to be stationary with respect to the toy coupling member in the normal-use state of the toy assembly.
47. The toy kit according to Embodiment 45 or 46, wherein the body and the connector coupling member are connected to be rotatable with respect to each other.
48. The toy kit according to Embodiment 47, wherein the connection allows the body to rotate relative to the connector coupling member in the normal use-state.
49. The toy kit according to Embodiment 47 or 48, wherein the connection allows the connector coupling member to rotate relative to the body in the abnormal use-state.
50. The toy kit according to any one of Embodiments 45 to 49, wherein upon being assembled, the toy assembly comprises a rotation restriction mechanism for selectively restricting the relative rotation between the connector coupling member and the toy coupling member during the normal-use state.
51. The toy kit according to Embodiment 50, wherein the rotation restriction mechanism allows the relative rotation between the connector coupling member and the toy coupling member during the abnormal-use state.
52. The toy kit according to any one of Embodiments 45 to 51, wherein the fixation between the toy coupling member and the connector coupling member is a quick-attachment type.
53. The toy kit according to Embodiment 52, wherein the fixation is a magnetic coupling.
54. The toy kit according to Embodiment 53, wherein the coupling is of a feed-lock connector type.
55. The toy kit according to any one of Embodiments 52 to 54, wherein upon being assembled, the toy assembly comprises a coupling interface between the toy coupling member and the connector coupling member extending at least partially along a plane perpendicular to the central axis.
56. The toy kit according to any one of Embodiments 45 to 55, wherein the toy mobile is a motorized toy mobile comprising:
   - an interior space defined by the body of the toy mobile; and
   - a motor having a motor body and a shaft extending at least partially along the central axis, the motor being at least partially disposed within the interior space, one of the motor body and the shaft being at least indirectly statically connected to the body so as to be rotatable together therewith about the other one of the motor body and the shaft during the normal-use state, and the other one of the motor body and the shaft being rotatable with respect to the body during the abnormal-use state.
57. The toy kit according to Embodiment 56, wherein said other one of the motor body and the shaft being statically connected to the connector coupling member and rotatable therewith during the abnormal-use state.
58. The toy kit according to Embodiment 56 or 57, wherein the motor body is at least indirectly statically connected to the body of the toy mobile and is rotatable together therewith about the shaft during the normal-use state.
59. The toy kit according to Embodiment 58, wherein the shaft is statically connected to the connector coupling member and is rotatable together therewith about the motor body during the abnormal-use state.
60. The toy kit according to any one of Embodiments 45 to 59, wherein the connector is operable for quick and secure detachable attachment to a target of the toy mobile or any other external component, the target having a trappable portion having a length and two dimensions perpendicular thereto, said connector comprising;
   - a trapping space having a shape and dimensions corresponding to those of the trappable portion, a length shorter than the length of trappable portion and an open end through which the trappable portion can be received in a direction perpendicular to the length of the trapping portion;
   - a locking space via which the trapping space is accessible from an exterior of the connector;
   - a locking member movable within the locking space between an open position in which access to the trapping space from an exterior of the connector via the locking space is allowed and a closed position in which access to the trapping space from the exterior of the connector via the locking space is blocked;
   - a preventing mechanism for restricting access from the trapping space into the locking space when the locking member is in the closed position; and
   - an external component engaging portion operable for securely receiving a corresponding portion of the toy mobile or any other external component.
61. The toy kit according to Embodiment 60, wherein the preventing mechanism comprises a barrier separating the trapping space and the locking space.
62. The toy kit according to Embodiment 61, wherein said barrier is moveable along with the movement of the locking member so as to allow access to the trapping space from the locking space during the open position and so as to restrict access from the trapping space to the locking space during the closed position.
63. The toy kit according to Embodiment 61 or 62, said barrier being at least partially constituted by a protrusion extending from the locking member.
64. The toy kit according to Embodiment 63, wherein said locking space is at least partially defined by an interior wall of the connector, said interior wall comprising a cavity for receiving therewithin the protrusion at the open position of the locking member.
65. The toy kit according to any one of Embodiments 60 to 64, wherein said locking member is constituted by a spring-loaded lever mechanism comprising a target engaging portion having a first surface facing the exterior of the connector, said spring-loaded lever mechanism being biased in a first direction towards the closed position.
66. The toy kit according to Embodiment 65, wherein the locking member is moveable into the open position by pressing against said first surface for introducing the trappable portion of the target into the trapping space.
67. The toy kit according to Embodiment 65 or 66, wherein said spring-loaded lever mechanism further comprises a handle portion urgeable in a second direction, opposite the first direction, to move the locking member into the open position.
68. The toy kit according to any one of Embodiments 60 to 67, wherein the external component engaging portion is operable for detachably receiving said corresponding portion of the toy mobile or other external component.
69. The toy kit according to Embodiments 68, wherein said external component engaging portion comprises a slot for removably receiving therethrough said corresponding portion, said connector comprising a blocking member to selectively allow and block an access through the slot.
70. The toy kit according to Embodiment 69, when dependent on Embodiment 41, wherein said blocking member is constituted by said handle portion, wherein the access through the slot is allowed during the open position of the locking member and is blocked during the closed position of the locking member.
71. A toy mobile attachable to a target so as to be suspendable therefrom, said toy mobile comprising a body having an upper portion and a lower portion spaced along a central axis of the body in a central reference plane thereof, and at least one arm, said upper portion comprising a target connecting member for the attachment of the body to the target, and said arm having a distal end allowing a toy to be connected thereto, and a proximal end, at which said at least one arm is mounted to said body between the upper and lower portions, said at least one arm being at least partially pivotable between a retracted position, in which said distal end is located at a first distance from said central axis, and an extended position, in which said distal end is located at a second distance from said central axis, which second distance exceeds the first distance, said at least one arm having such shape and orientation relative to the body that, in both positions of the at least one arm, a height of a projection of the arm on the central reference plane is shorter than a distance between the distal and proximal ends of the arm.
72. The toy mobile according to Embodiment 71, wherein an outermost point of said upper portion lies in an upper reference plane of the body and an outermost point of said lower portion lines in a lower reference plane of the body, and wherein in both the extended and retracted positions of the arm, at least a majority of the arm is disposed in between said upper and lower reference planes.
73. The toy mobile according to Embodiment 72, wherein in both the extended and retracted positions of the at least one arm, the distal end of the arm is disposed above said lower reference plane.
74. The toy mobile according to Embodiment 72 or 73, wherein in both the extended and retracted positions of the at least one arm, the distal end of the at least one arm is disposed below said upper reference plane.
75. The toy mobile according to any one of Embodiments 71 to 74, wherein the proximal end of the at least one arm is connected to a pivot joint, and said at least one arm is radially extendable by pivoting about said pivot joint.
76. The toy mobile according to any one of Embodiments 71 to 75, wherein the body comprises at least one recess so as to at least partially accommodate the at least one arm when in the retracted position and so as to allow the at least one arm to protrude from the recess along at least a majority of the length of the arm, when in the extended position.
77. The toy mobile according to Embodiment 76, wherein the at least one arm is pivotably mounted to the body with its proximal end by means of a pivot joint disposed within the recess and operable to allow pivoting of the at least one arm between the retracted and extended positions.
78. The toy mobile according to Embodiment 76 or 77, wherein the at least one recess is elongated along the circumference of the body and has a shape corresponding to that of the at least one arm, allowing to accommodate the arm within the recess at least along a majority of the arm.
79. The toy mobile according to any one of Embodiments 76 to 78, wherein the recess has a height along the central axis and a depth perpendicular to the central axis, corresponding to those of the arm so as to be able to accommodate the arm in its entirety when in the retracted position.
80. The toy mobile according to any one of Embodiments 71 to 79, wherein the at least one arm is constituted by at least two arms.
81. The toy mobile according to Embodiment 80, when dependent on any one of Embodiments 76 to 79, wherein the at least one recess is constituted by at least two recesses each corresponding to one of the at least two arms.
82. The toy mobile according to any one of Embodiments 71 to 81, wherein the body has an exterior surface and at least a portion of said exterior surface has a continuously curved shape extending around the central axis.
83. The toy mobile according to Embodiment 82, wherein said portion of said exterior surface has a variable or constant diameter about the central axis, along the length of the central axis.
84. The toy mobile according to any one of Embodiments 71 to 83, wherein said at least one arm is rotatable about the central axis.
85. The toy mobile according to any one of Embodiments 70 to 84, wherein the toy mobile is a motorized toy mobile comprising:
   - an interior space defined by the body of the toy mobile; and
   - a motor having a motor body and a shaft extending at least partially along the central axis, the motor being at least partially disposed within the interior space, one of the motor body and the shaft being at least indirectly statically connected to the body so as to be rotatable together therewith about the other one of the motor body and the shaft during the normal-use state, and the other one of the motor body and the shaft being rotatable with respect to the body during the abnormal-use state.
86. The toy mobile according to Embodiment 85, wherein said other one of the motor body and the shaft being statically connected to the connector coupling member and rotatable therewith during the abnormal-use state.
87. The toy mobile according to Embodiment 85 or 86, wherein the motor body is at least indirectly statically connected to the body of the toy mobile and is rotatable together therewith about the shaft during the normal-use state.
88. The toy kit according to Embodiment 87, wherein the shaft is statically connected to the connector coupling member and is rotatable together therewith about the motor body during the abnormal-use state.
89. A motorized toy mobile detachably attachable to a target so as to be suspendable therefrom in a field of view of a child, said toy mobile having a body and being operable in a normal-use state in which the body of the toy mobile is rotatable about a central axis thereof, and an abnormal-use state in which a force is applied to the toy mobile, at least indirectly, interfering with the rotation of the body of the toy mobile, said toy mobile comprising:
   an interior space defined by the body of the toy mobile; and
   a motor having a motor body and a shaft extending at least partially along the central axis, the motor being at least partially disposed within the interior space, one of the motor body and the shaft being at least indirectly statically connected to the body so as to be rotatable together therewith about the other one of the motor body and the shaft during the normal-use state, and the other one of the motor body and the shaft being rotatable with respect to the body during the abnormal-use state.
90. The motorized toy mobile according to Embodiment 89, further comprising a connector coupling member for fixing the toy mobile at least indirectly to a connector, said other one of the motor body and the shaft being statically connected to the connector coupling member and rotatable therewith during the abnormal-use state.
91. The motorized toy mobile according to Embodiment 90, further comprising a rotation interface between the body and the connector coupling member allowing relative rotation therebetween at the normal-use state and the abnormal-use state.
92. The motorized toy mobile according to any one of Embodiments 89 to 91, further comprising at least partially a rotation restriction mechanism for restricting the rotation of the other one of the motor body and the shaft during the normal-use state.
93. The motorized toy mobile according to any one of Embodiments 89 to 92, wherein the motor body is at least indirectly statically connected to the body and is rotatable together therewith about the shaft during the normal-use state.
94. The motorized toy mobile according to Embodiment 93, wherein the shaft is statically connected to the connector coupling member and is rotatable together therewith about the motor body during the abnormal-use state.
95. The motorized toy mobile according to any one of Embodiments 89 to 94, further comprising at least one arm having a proximal end connected to said body and a distal end allowing a toy to be connected thereto.
96. The motorized toy mobile according to Embodiment 95, wherein said at least one arm is operable to change the position thereof between a retracted position and an extended position in which said distal end of the arm is located at a distance from the central axis, greater than that in the retracted position.
97. The motorized toy mobile according to Embodiment 96, wherein said body has an exterior surface comprising at least one recess so as to at least partially accommodate the arm when in the retraced position and so as to allow the arm to protrude from the recess along at least a majority of the length of the arm, when in the extended position.
98. The motorized toy mobile according to Embodiment 97, wherein the arm is pivotably mounted to the body with its proximal end by means of a pivot joint disposed within the recess and operable to allow pivoting of the arm between the retracted and extended positions.
99. The motorized toy mobile according to Embodiment 97 or 98, wherein the recess is elongated along the circumference of the body and has a shape corresponding to that of the arm, allowing to accommodate the arm within the recess at least along a majority of the arm.
100. The motorized toy mobile according to any one of Embodiments 97 to 99, wherein the recess has a height along the central axis and a depth perpendicular to the central axis, corresponding to those of the arm so as to be able to accommodate the arm in its entirety when in the retracted position.
101. The motorized toy mobile according to any one of Embodiments 95 to 100, wherein the at least one arm is constituted by at least two arms.
102. The motorized toy mobile according to Embodiment 101, when dependent on any one of Embodiments 97 to 100, wherein the at least one recess is constituted by at least two recesses each corresponding to one of the at least two arms.
103. A connector for quick and secure detachable attachment of an external component to a target having a trappable portion having a length and two dimensions perpendicular thereto, said connector comprising;
   - a trapping space having a shape and dimensions corresponding to those of the trappable portion, a length shorter than the length of trappable portion and an open end through which the trappable portion can be received in a direction perpendicular to the length of the trapping portion;
   - a locking space via which the trapping space is accessible from an exterior of the connector;
   - a locking member movable within the locking space between an open position in which access to the trapping space from an exterior of the connector via the locking space is allowed and a closed position in which access to the trapping space from the exterior of the connector via the locking space is blocked;
   - a preventing mechanism for restricting access from the trapping space into the locking space when the locking member is in the closed position; and
   - an external component engaging portion operable for securely receiving a corresponding portion of the external component.
104. The connector according to Embodiment 103, wherein the preventing mechanism comprises a barrier separating the trapping space and the locking space.
105. The connector according to Embodiment 104, said barrier being moveable along with the movement of the locking member so as to allow access to the trapping space from the locking space during the open position and so as to restrict access from the trapping space to the locking space during the closed position.
106. The connector according to Embodiment 104 or 105, said barrier being at least partially constituted by a protrusion extending from the locking member.
107. The connector according to Embodiment 106, wherein said locking space is at least partially defined by an interior wall of the connector, said interior wall comprising a cavity for receiving therewithin the protrusion at the open position of the locking member.
108. The connector according to any one of Embodiments 103 to 107, wherein said locking member is constituted by a spring-loaded lever mechanism comprising a target engaging portion having a first surface facing the exterior of the connector, said spring-loaded lever mechanism being biased in a first direction towards the closed position.
109. The connector according to Embodiment 108, wherein the locking member is moveable into the open position by pressing against said first surface for introducing the trappable portion of the target into the trapping space.
110. The connector according to Embodiment 108 or 109, said spring-loaded lever mechanism further comprising a handle portion being urgeable in a second direction, opposite the first direction, to move the locking member into the open position.
111. The connector according to Embodiment 110, wherein said spring-loaded lever mechanism comprises an engagement arrangement, said handle portion and said target engaging portion being engaged with each other via said engagement arrangement, and said engagement arrangement being designed to facilitate coordinated movement between said handle portion and said target engaging portion.
112. The connector according to Embodiment 111, wherein said engagement arrangement comprises a first engagement element on said handle portion and a second engagement element on said target engaging portion, said engagement elements being operable to engage each other and being moveable with respect to each other.
113. The connector according to Embodiment 112, wherein said first engagement element comprises one of: one or more mating protrusions and one or more grooves, and said second engagement element comprises the other one of: one or more mating protrusions and one or more grooves.
114. The connector according to Embodiment 113, wherein said first engagement element comprises one or more grooves, and said second engagement element comprises one or more mating protrusions, said mating protrusions being slidable within said grooves.
115. The connector according to any one of Embodiments 108 to 114, wherein said target engaging portion comprises two dynamic elements, one of said dynamic elements comprising said first surface and at least one of said two dynamic elements being movable with respect to the other one of said two dynamic elements.
116. The connector according to Embodiment 115, wherein said two dynamic elements are biased away from each other.
117. The connector according to Embodiment 115 or 116, when dependent on Embodiment 104 at least indirectly, wherein said barrier is at least partially constituted by a protrusion extending from at least one of said two dynamic elements.
118. The connector according to Embodiment 117, wherein said barrier is at least partially constituted by corresponding protrusions extending from each one of said two dynamic elements.
119. The connector according to any one of Embodiments 115 to 118, wherein said connector comprises a target engaging portion pivot mechanism, and each of said two dynamic elements has a first end portion pivotably connected to said target engaging portion pivot mechanism.
120. The connector according to Embodiment 119, wherein each of said two dynamic elements has a second end portion spaced from said first portion, the second end portions of the two dynamic elements being spaced from each other by a first distance when said locking member is in the closed position thereof and a second distance greater than said first distance when said locking member is in the open position thereof.
121. The connector according to Embodiment 120, when dependent on Embodiment 117 at least indirectly, wherein the protrusion extends from the corresponding second end portion of said at least one of said two dynamic elements
122. The connector according to any one of Embodiments 111 to 121, wherein said connector comprises a handle pivoting mechanism allowing pivoting of the handle portion about a handle pivot axis, said handle portion comprising a handle first end portion, which a user can apply an urging force to, and a handle second end portion, operable to move the target engaging portion, wherein when said urging force is applied to said handle first end portion, said handle portion pivots about said handle pivot axis, and said target portion engaging end moves said target engaging portion via said engagement arrangement.
123. The connector according to any one of Embodiments 103 to 122, wherein the external component engaging portion is operable for detachably receiving said corresponding portion of the external component.
124. The connector according to Embodiment 123, wherein said external component engaging portion comprises a slot for removably receiving therethrough at least said corresponding portion of the external component, said connector comprising a blocking member to selectively allow and block an access through the slot.
125. The connector according to Embodiment 124, when dependent on Embodiment 110 at least indirectly, wherein said blocking member is constituted by at least a part of said handle portion, wherein the access through the slot is allowed during the open position of the locking member and is blocked during the closed position of the locking member.
126. The connector according to embodiment 125, when dependent on Embodiment 110 at least indirectly, wherein said blocking member is movable between an access-allowing position, wherein access through the slot is allowed, and an access-preventing position wherein access through the slot is blocked, said blocking member being biased towards said access-preventing position.
127. The connector according to Embodiment 126, wherein said handle portion further comprises a blocking member engaging portion operable to selectively move said blocking member towards the access-allowing position when a force is applied thereto
128. The connector according to Embodiment 127, wherein said blocking member engaging portion moves said blocking member towards the access-allowing position thereof when the handle is urged to move the locking member into the open position thereof.
129. The connector according to any one of Embodiments 103 to 128, wherein said external component has a connector coupling portion, and said connector constitutes a part of an assembly comprising said connector and a coupler for facilitating coupling between the external component and the connector, the coupler having a first portion connectable to said connector coupling portion of the external component; the connector comprising toy coupling member fixed to the coupler at a second portion of the coupler and configured to create a rotation interface between the connector coupling member and the toy coupling member selectively allowing relative rotation therebetween.
130. The connector according to Embodiment 129, wherein said assembly comprises a rotation restriction mechanism for selectively restricting the relative rotation between the connector coupling member and the toy coupling member at said rotation interface.
131. The connector according to Embodiment 130, wherein at least a first part of the rotation restriction mechanism is associated with the toy coupling member and at least a second part of the rotation restriction mechanism is associated with the connector coupling member.
132. The connector according to Embodiment 131, wherein one of the first and second parts of the rotation restriction mechanism comprises a first magnet and the other one of the first and second parts of the rotation restriction mechanism comprises a second magnet or a magnetic material.
133. The connector according to Embodiment 132, wherein the first and second parts of the rotation restriction mechanism operate to allow coupling of the connector coupling member with the toy coupling member.

### BRIEF DESCRIPTION OF THE DRAWINGS

In order to better understand the subject matter that is disclosed herein and to exemplify how it may be carried out in practice, embodiments will now be described, by way of non-limiting examples only, with reference to the accompanying drawings, in which:
**Fig. 1A** schematically illustrates a toy kit comprising a mobile toy and a connector according to an example of the presently disclosed subject matter;
**Fig. 1B** schematically illustrates the toy kit of Fig. 1A in the assembled state, thereby constituting a toy assembly, in its normal-use state;
**Fig. 1C** schematically illustrates the toy assembly of Fig. 1B in its abnormal use state;
**Fig. 2A** schematically illustrates a toy kit comprising a mobile toy, a coupler, and a connector according to another example of the presently disclosed subject matter;
**Fig. 2B** schematically illustrates the toy kit of Fig. 2A in the assembled state, thereby constituting a toy assembly, in its normal-use state;
**Fig. 2C** schematically illustrates the toy assembly of Fig. 2B in its abnormal use state;
**Fig. 3A** is a front perspective view of a toy kit according to yet another example of the presently disclosed subject matter, illustrating a portion of its mobile toy and a portion of its connector;
**Fig. 3B** is a sectional view taken along line A-A in Fig. 3A illustrating an interior of the toy kit of Fig. 3A according to an example of the presently disclosed subject matter;
**Fig. 3C** is a sectional view taken along line A-A in Fig. 3A illustrating an interior of the toy kit of Fig. 3A according to another example of the presently disclosed subject matter;
**Fig. 3D** is a sectional view taken along line A-A in Fig. 3A illustrating an interior of the toy kit of Fig. 3A according to yet another example of the presently disclosed subject matter;
**Fig. 3E** is a sectional view taken along line A-A in Fig. 3A illustrating an interior of the toy kit of Fig. 3A according to yet another example of the presently disclosed subject matter;
**Fig. 3F** is the same sectional view as that of Fig. 3E, illustrating the portions of the mobile toy and connector of the toy kit of Fig. 3E in an assembled state;
**Fig. 4A** schematically illustrates a mobile toy according to an example of the presently disclosed subject matter, in its normal-use state;
**Fig. 4B** schematically illustrates the mobile toy of Fig. 4A in its abnormal-use state;
**Fig. 4C** schematically illustrates a mobile toy according to another example of the presently disclosed subject matter, in its normal-use state;
**Fig. 4D** schematically illustrates the mobile toy of Fig. 4C in its abnormal-use state;
**Fig. 4E** is a sectional view of a mobile toy illustrating an interior thereof according to an example of the presently disclosed subject matter;
**Fig. 5A** schematically illustrates a front view of a mobile toy according to an example of the presently disclosed subject matter;
**Fig. 5B** schematically illustrates a side view of the mobile toy of Fig. 5A;
**Fig. 5C** is a front perspective view of a portion of a mobile toy according to an example of the presently disclosed subject matter illustrating its arm in retracted position;
**Fig. 5D** illustrates the portion of the mobile toy of Fig. 5C with its arm in extended position;
**Fig. 5E** is a front perspective view of a portion of a mobile toy having two arms according to another example of the presently disclosed subject matter illustrating its arms in retracted position;
**Fig. 6A** is a side perspective view of a portion of a connector according to an example of the presently disclosed subject matter illustrating its locking member in closed position;
**Fig. 6B** illustrates the portion of the connector of Fig. 6A with its locking member in open position;
**Fig. 6C** is a side perspective view of a portion of a connector according to another example of the presently disclosed subject matter illustrating its locking member in closed position;
**Fig. 6D** illustrates the portion of the connector of Fig. 6C with its locking member in open position;
**Fig. 6E** is a side perspective view of a portion of a connector according to yet another example of the presently disclosed subject matter;
**Fig. 6F** is a side perspective view of a connector according to yet another example of the presently disclosed subject matter illustrating its locking member in closed position;
**Fig. 6G** is a bottom perspective view of the connector of Fig. 6F;
**Fig. 7A** is a side perspective view of a portion of a connector according to an example of the presently disclosed subject matter illustrating its locking member in closed position;
**Fig. 7B** illustrates the portion of the connector of Fig. 7A with its locking member in open position;
**Fig. 7C** is a sectional view taken along line C-C in Fig. 7A, illustrating an interior of the portion of the connector according to an example of the presently disclosed subject matter;
**Fig. 7D** is a sectional view taken along line D-D in Fig. 7B, illustrating an interior of the portion of the connector according to an example of the presently disclosed subject matter;
**Fig. 7E** illustrates a perspective view of a connector according to an example of the presently disclosed subject matter illustrating its blocking member in the access-preventing position thereof;
**Fig. 7F** illustrates a perspective view of a connector according to an example of the presently disclosed subject matter illustrating its blocking member in the access-preventing position thereof;
**Fig. 7G** is a sectional view taken along line E-E in Fig. 7E, illustrating an interior of the connector according to an example of the presently disclosed subject matter;
**Fig. 7H** is a sectional view taken along line F-F in Fig. 7F, illustrating an interior of the connector according to an example of the presently disclosed subject matter;
**Fig**. **8A** is a front perspective view of a toy assembly according to an example of the presently disclosed subject matter; and
**Fig**. **8B** is a sectional view taken along line B-B in Fig. 8A illustrating an interior of the toy assembly of Fig. 8A.

### DETAILED DESCRIPTION OF EMBODIMENTS

The following detailed description provides details of various examples of compact mobile toys, various examples of connectors to suspend from a target a mobile toy according to any of the examples described herein or any other conventionally known mobile toy, various examples of toy kits comprising one or more mobile toys according to any of the examples described herein and one or more connectors according to any of the examples described herein, which can be assembled to constitute toy assemblies.

It is to be understood herein that although same reference numerals have been designated for same elements (kits, mobile toys, connectors, and their components) in different examples described herein for the purposes of consistency and clarity, however, the elements designated by same reference numerals can have different structures.

For the purposes of all the examples described in the present description, it is to be understood herein that the terms "integrally formed" or "integrally connected" or "integrally assembled" or equivalents thereof with respect to two elements or parts are intended to specify that the elements are formed separately and are connected together so as not to be detachable from one another or at least not to be readily detachable from each other. Further, the terms "unitarily formed" or "unitarily connected" or "unitary body" or equivalents thereof with respect to two elements or parts are intended to specify that the elements are formed as a monolithic structure or as a single element. Furthermore, the term "statically connected" or "statically coupled" or equivalents thereof with respect to two elements or parts are intended to specify that the elements are formed separately and are coupled or assembled or connected or mounted or fastened together so as not to be rotatable with respect to each other. Furthermore, the term "rotatably connected" or "rotatably coupled" or equivalents thereof with respect to two elements or parts are intended to specify that the elements are formed separately and are coupled or assembled or connected or mounted or fastened together so as to be rotatable with respect to each other.

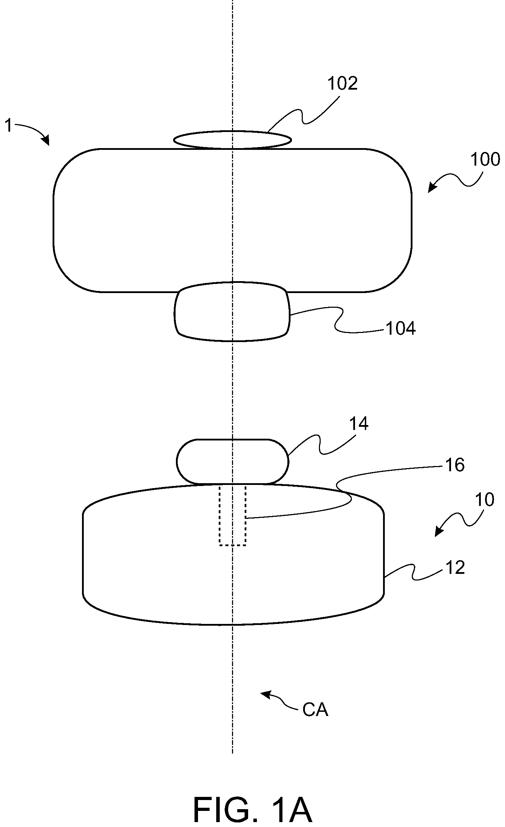

Fig. 1A is a schematic drawing of a toy kit (also referred to herein as kit), generally designated as 1, according to an example of the presently disclosed subject matter. The toy kit 1 according to the example illustrated in Fig. 1A, includes a mobile toy, generally designated as 10, and a connector, generally designated as 100, for suspending thereby the mobile toy 10 from a target (not shown) for example via a target engaging component 102. The target can generally be a frame of a child cradle, crib, stroller, a child car, or any equivalent equipment for carrying a child, whereas the frame can include any support bar, hook arrangement, or any equivalent designated portion for suspending therefrom a mobile toy in a field of view of the child. In some examples, the target can be any suitable fixed portion equivalent to those described above on a wall, a ceiling, or furniture in a room. In general, the target engaging component 102 can have any structure corresponding to the structure of the target so as to detachably and securely attach thereto. For example, the detachable attachment of the target engaging component 102 with the target can be any type of quick-fitting attachment via a suitable structure including any one of a snap-fit attachment, magnetic coupling, hook arrangement, clamp attachment, belt fastener, Velcro fastener, glue attachment and equivalents thereof. In some examples, the attachment of the target engaging component 102 with the target can be more of a not-readily-detachable kind such as by the means of fasteners or screws.

The mobile toy 10 has a body 12 (also referred to herein as mobile body 12 or toy body 12 or mobile toy body 12) defining an overall outer shape thereof. It is to be understood herein that although the body 12 has been illustrated as having curved top and bottom surfaces, the body 12 can have any shape, for example, rectangular, square, oval, circular, or equivalent cross-section with flat or curved top and/or bottom, suitable to be suspended by the means of the connector 100 and for connecting thereto a toy in the field of view of a child.

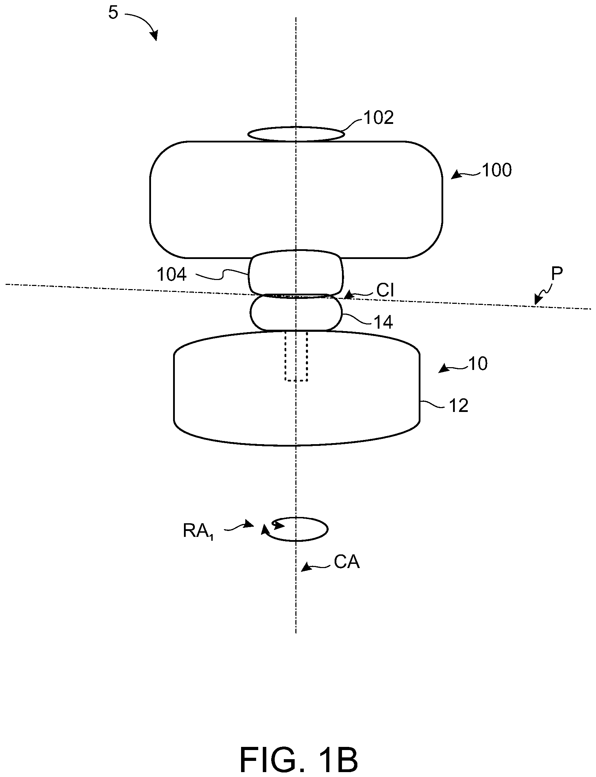

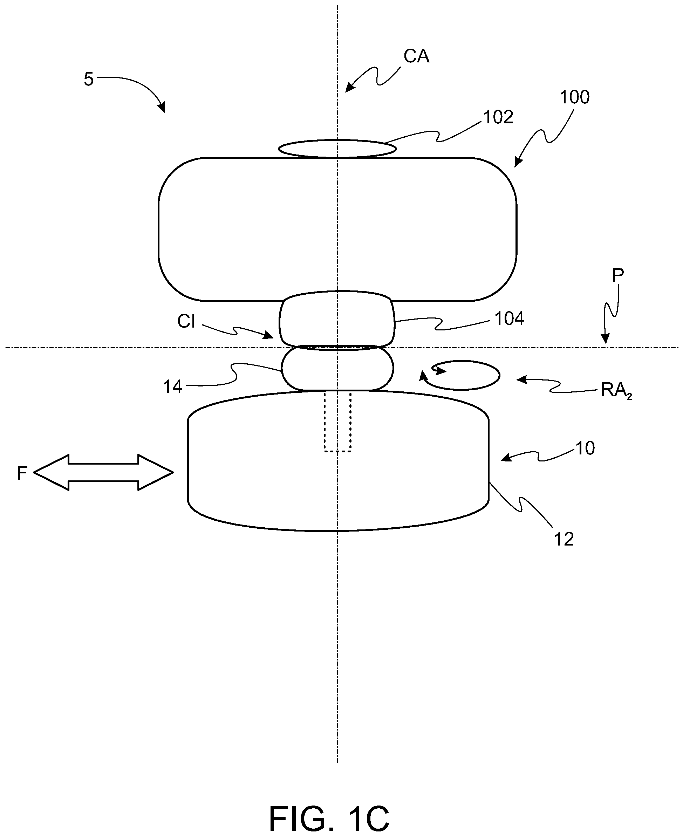

The mobile toy 10 further has a connector coupling member 14 for coupling the mobile toy 10 to the connector 100 via a toy coupling member 104 of the connector 100, for example as shown in Figs. 1B and 1C. In general, the connector coupling member 14 and the toy coupling member 104 can have any structure corresponding to each other for at least indirectly coupling or fixing to each other. For example, the fixation of the connector coupling member 14 with the connector coupling member 104 can be any type of quick-attachment type via a suitable structure including any one of a feed-lock connector type, snap-fit attachment, magnetic coupling, electrical coupling, and equivalents thereof. In some examples, the connector coupling member 14 and the toy coupling member 104 can be coupled to each other directly. In other examples, the connector coupling member 14 and the toy coupling member 104 can be coupled to each other indirectly, for example via an intermediate coupling member, generally referred to herein as a coupler.

Reference is now made to Figs. 1B and 1C illustrating the mobile toy 10 and the connector 100 assembled together to constitute a toy assembly, generally designated as 5, shown in its normal-use state in Fig. 1B and its abnormal-use state in Fig. 1C. For the purposes of all the examples described in the present description, the normal-use state is to be understood as a state in which the toy assembly and/or the mobile toy is intended to operate normally (perform its intended operation), i.e., the body of the mobile toy is rotatable about a central axis CA, and the abnormal-use state is to be understood as a state in which the toy assembly and/or the mobile toy does not operate as normally intended (does not perform its intended operation), i.e., a force (pushing or pulling) at least indirectly interfering with the rotation (the intended rotation of the body in the normal-use state) of the body is applied thereto. The interfering force at least restricts, if not prevent, the rotation of the body about the central axis CA.

The toy assembly 5 comprises a coupling interface CI between the toy coupling member 104 and the connector coupling member 14 extending along a plane P perpendicular to the central axis CA. The fixation between the connector coupling member 14 and the toy coupling member 104 is a rotatable connection such as to allow the connector coupling member 14 while staying fixed with the toy coupling member 104, to rotate with respect to the toy coupling member 104 in the abnormal-use state of the toy assembly 5.

It is to be understood herein that the mobile toy 10 and the connector 100 can be sold in the disassembled state as the kit 1 or in the assembled state as the toy assembly 5. Accordingly, for the purposes of all the examples described in the present description, scope of the term 'fix,' 'fixing,' 'fixed,' or 'fixation' with respect to the connector coupling member 14 and the toy coupling member 104 is to be understood as including coupling or assembling together by a user when the mobile toy and the connector are sold as a kit, and including detachably or not detachably (integrally) connected together when the mobile toy and the connector are sold as a toy assembly.

The mobile toy 10 has a normally static component 16, which in the illustrated example is mounted within the body 12. It is to be understood herein that the normally static component 16 can be fully or partially positioned outside the body 12. For the purposes of all the examples described in the present description, it is to be understood herein that the normally static component 16 has been referred to so because it is intended to remain static or stationary during the normal-use state of the mobile toy/assembly. In general, the normally static component 16 can be any component intended to be static during the normal-use state and can have any structure. For example, the normally static component 16 can constitute a shaft of a motor, a fastener, or even a portion of the connector coupling member 14. For instance, in some examples, the normally static component 16 can be integrally formed or unitarily formed with the connector coupling member 14. In other examples, the normally static component 16 can be detachably connected to the connector coupling member 14. In the illustrated example, the normally static component 16 is shown to be separate component from and statically (not rotatably with respect thereto) connected to the connector coupling member 14 so as to rotate together therewith during the abnormal-use state of the toy assembly.

In general, the body 12 can be so connected to the connector coupling member 14 as to allow relative rotation between the body 12 and the connector coupling member 14. For instance, during the normal-use state of the toy assembly 5, the body 12 can rotate about the central axis CA with respect to the connector coupling member 14, which by virtue of its fixation with the toy coupling member 104 remains stationary during the normal-use state. For instance, the fixation between the connector coupling member 14 and the toy coupling member 104 can be such as to restrict the relative rotation therebetween in the normal-use state, and to allow the relative rotation therebetween in the abnormal-use state. In some examples, the fixation can include a rotation restriction mechanism to selectively restrict the relative rotation, which can include a magnetic mechanism, an electrical mechanism, a mechanical mechanism, or equivalents thereof. In some examples, the rotation restriction mechanism can be constituted by a friction between the parts of the connector coupling member and toy coupling member engaging each other that restricts the relative rotation until a rotational force greater than the frictional force is applied. In some examples, the rotation restriction mechanism can be constituted by two components, one associated with each of the connector coupling member and toy coupling member, whereas the two components can be magnetically, mechanically, or electrically coupled to each other to selectively restrict rotation therebetween. In such examples, the relative rotation between the two components can be restricted until a trigger event such as the rotational force crossing a threshold is sensed.

On the other hand, during the abnormal-use state of the toy assembly 5, the rotation of the body can be restricted by an external interfering force (pulling or pushing force) and the connector coupling member 14 can rotate with respect to the body 12, by virtue of its fixation with the toy coupling member 104. It is to be understood herein that the connection between the body 12 and the connector coupling member 14 can be any detachable or integral (not detachable) connection arrangement suitable to allow relative rotation between the body 12 and the connector coupling member 14. For example, the connection arrangement can include any one of a mechanical, magnetic, and electrical coupling. In some examples, the body 12 and the connector coupling member 14 can be slidingly engaged with each other to allow rotation of one with respect to the other. In some examples, the connection arrangement can include a ball joint, a feed-lock connection j oint, or an equivalent thereof.

The normal-use state of the toy assembly 5 is illustrated in Fig. 1B, whereas the rotation of the body 12 about the central axis CA with respect to the connector coupling member 14 is depicted by the rotational arrow RA1. Accordingly, in general, the toy assembly 5 includes a first rotation interface between the body 12 and the connector coupling member 14. The abnormal-use state of the toy assembly 5 is illustrated in Fig. 1C, whereas the rotation of the body 12 about the central axis CA is illustrated as restricted by the force F, and the rotation of the connector coupling member 14 with respect to the toy coupling member 104 is depicted by the rotational arrow RA2. Accordingly, in general, the toy assembly 5 includes a second rotation interface between the connector coupling member 14 and the toy coupling member 104.

For the purposes of all the examples described in the present description, it is to be understood herein that the relative rotation between the body 12 and the connector coupling member 14 and/or the relative rotation between the connector coupling member 14 and the toy coupling member 104 can be an infinite rotation in any of the clockwise and counter-clockwise direction, or can be a repeated to and fro rotation in the clockwise and counter-clockwise direction.

It is to be further understood herein that in some examples, the connector coupling member 14 can be formed in two parts either detachably or not detachably connected to each other while being rotatable with respect to each other, and a first one of the two parts can be statically coupled to the toy coupling member 104 while a second one of the two parts can rotate with respect to the first part and thereby with respect to the toy coupling member 104. In some examples, the toy coupling member 104 can be formed in two parts either detachably or not detachably connected to each other while being rotatable with respect to each other, and a first one of the two parts can be statically coupled to the connector while a second one of the two parts can be statically coupled to the connector coupling member thereby allowing rotation of the connector coupling member with respect to the first part.

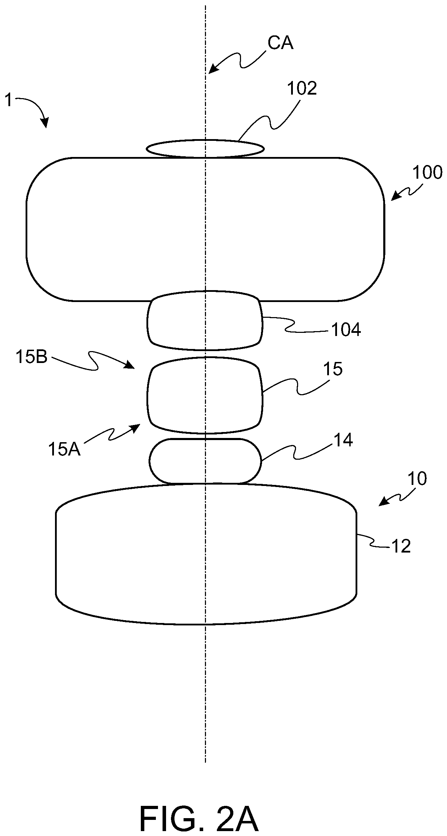

Fig. 2A is a schematic drawing of a toy kit 1 according to another example of the presently disclosed subject matter. It is to be understood herein that the kit and its components according to the example illustrated in Fig. 2A have been designated by same reference numerals as that of the kit and its corresponding components according to the example illustrated in Fig. 1A for the purposes of consistency and clarity, however, the kit and its components according to the example illustrated in Fig. 2A can have different structures than the kit and its corresponding components according to the example illustrated in Fig. 1A. The toy kit 1 according to the example illustrated in Fig. 2A, includes a mobile toy, generally designated as 10, a connector, generally designated as 100, for suspending thereby the mobile toy 10 from a target (not shown), and a coupler, generally designated as 15, for facilitating coupling between the mobile toy 10 and the connector 100 to constitute the toy assembly 5. The toy assembly 5, the mobile toy 10, and the connector 100 of the kit 1 according to the example illustrated in Fig. 2A can include some or all of the above-described features of the toy assembly 5, the mobile toy 10, and the connector 100 respectively of the kit 1 according to the example illustrated in Fig. 1A, with a major difference being that the mobile toy 10 and the connector 100 of the kit 1 according to the example illustrated in Fig. 2A are couplable (or coupled in case sold as the toy assembly) to each other via the coupler 15.

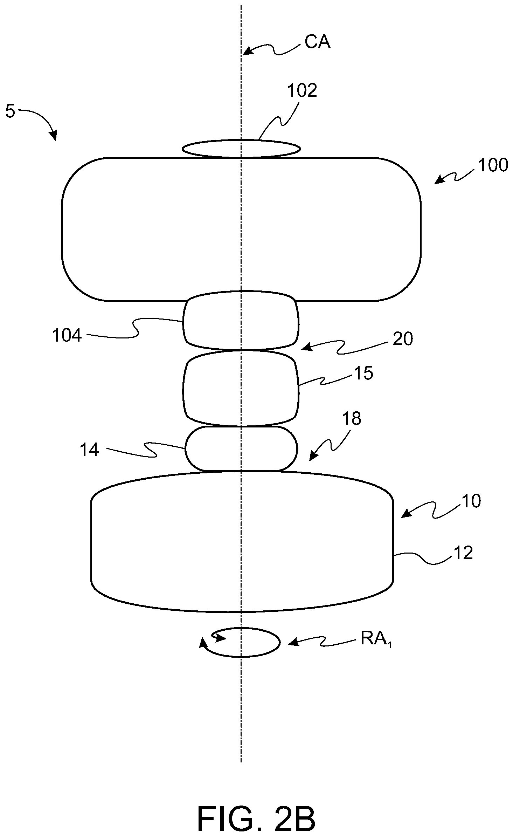

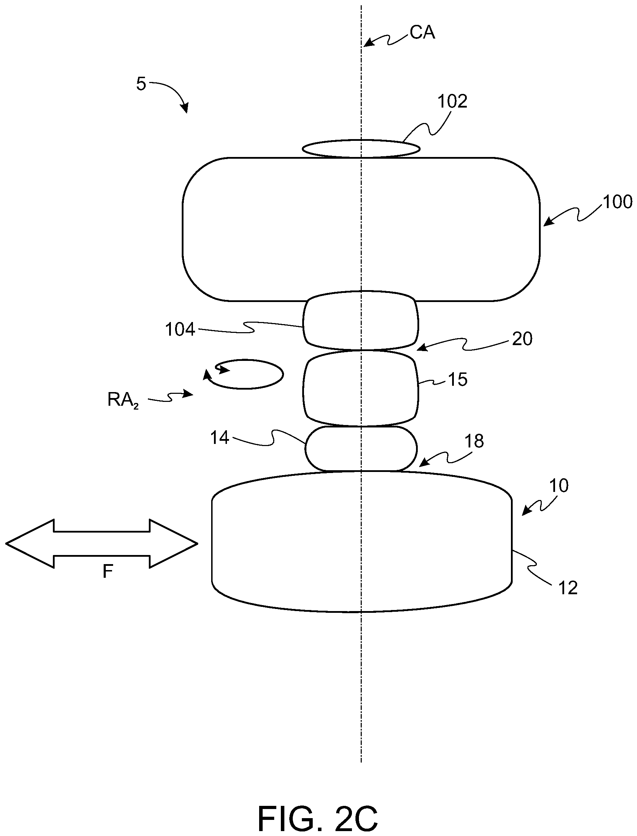

In general, the coupler 15 can have any structure suitable to facilitate the coupling between the mobile toy 10 and the connector 100 to constitute the toy assembly 5, illustrated in Figs. 2B and 2C. In general, the coupling or fixation arrangement between the connector coupling member 14 and the coupler 15 and/or between the coupler 15 and the toy coupling member 104 can have any structure corresponding to each other for coupling or fixing to each other. For example, the fixation or coupling arrangement can be any type of quick-attachment type via a suitable structure including any one of a feed-lock connector type, snap-fit attachment, magnetic coupling, electrical coupling, and equivalents thereof.

In the illustrated example, in the toy assembly 5, a first portion 15A (also referred to herein as coupler first portion) of the coupler 15 is fixed to the connector coupling member 14 and a second portion 15B (also referred to herein as coupler second portion) of the coupler 15 is fixed to the toy coupling member 104. The toy assembly 5 has a first rotation interface 18 between the body 12 and the connector coupling member 14. For example, the body 12 and the connector coupling member 14 can be rotatably connected to each other. In general, the description provided above with respect to the connection arrangement between the body 12 and the connector coupling member 14 with reference to the kit 1 according to the example illustrated in Figs. 1A to 1C applies to the connection arrangement between the body 12 and the connector coupling member 14 with reference to the kit 1 according to the example illustrated in Figs. 2A to 2C. Accordingly, the body 12 can rotate with respect to the connector coupling member 14 about the central axis CA.

Further, the toy assembly 5 has a second rotation interface 20 between the connector coupling member 14 and the toy coupling member 104. It is to be understood herein that although the second rotation interface 20 has been depicted between the coupler 14 and the toy coupling member 104 in the example illustrated in Figs. 2B and 2C, in other examples, the second rotation interface 20 can generally be located anywhere between the connector coupling member 14 and the toy coupling member 104 allowing the relative rotation therebetween. For instance, in some examples, the second rotation interface 20 can be located between the connector coupling member 14 and the coupler 15. In some examples, the coupler 15 can be formed in two parts either detachably or not detachably connected to each other while being rotatable with respect to each other at the second rotation interface located therebetween, and a first one of the two parts can be statically coupled to the connector coupling member 14 while a second one of the two parts can be statically coupled to the toy coupling member 104 thereby allowing rotation of the connector coupling member 14 with respect to the toy coupling member 104.

For the purposes of all the examples described in the present description, it is to be understood herein that the first and/or the second rotation interfaces can be structured to have any suitable rotatable connection arrangement between the corresponding elements. For instance, the connection arrangement can include any one of a mechanical, magnetic, and electrical coupling. In some examples, the corresponding elements intended to rotatable with respect to each other can be slidingly engaged with each other to allow rotation of one with respect to the other. In some examples, the connection arrangement can include a ball j oint, a feed-lock connection j oint, or an equivalent thereof with a basic purpose of allowing relative rotation between the connected elements.

The second rotation interface 20 selectively allows the relative rotation between the elements rotatably connected at the second rotation interface 20. In other words, the second rotation interface 20 can selectively allow and restrict the relative rotation between the elements rotatably connected at the second rotation interface 20. The toy assembly 5 can include a rotation restriction mechanism to selectively restrict the relative rotation at the second rotation interface 20, which can include a magnetic mechanism, an electrical mechanism, a mechanical mechanism, or equivalents thereof. In some examples, the rotation restriction mechanism can be constituted by a friction between the elements engaging each other at the second rotation interface 20 that restricts the relative rotation until a rotational force greater than the frictional force is applied. In some examples, the rotation restriction mechanism can be constituted by two components, one associated with each of the elements rotatably connected at the second rotation interface 20, whereas the two components can be magnetically, mechanically, or electrically coupled to each other to selectively restrict rotation therebetween. In such examples, the relative rotation between the two elements can be restricted until a trigger event such as the rotational force crossing a threshold is sensed.

The first rotation interface 18 allows the relative rotation between the body 12 and the connector coupling member 14 at least when the rotation at the second rotation interface 20 is restricted. The first rotation interface 18 allows the relative rotation between the body 12 and the connector coupling member 14 when the rotation at the second rotation interface 20 is allowed.

In some examples, the toy assembly 5 can have a normal-use state and an abnormal-use state. In general, the description provided above with respect to the normal-use state and abnormal-use state with reference to the toy assembly 5 according to the example illustrated in Figs. 1B and 1C applies to the normal-use state and abnormal-use state with reference to the toy assembly 5 according to the example illustrated in Figs. 2B and 2C. In the illustrated example, at the normal-use state, the relative rotation at the second rotation interface 20 is restricted while the relative rotation at the first rotation interface 18 is allowed, thereby allowing the body 12 to rotate with respect to the connector coupling member 14 as depicted by the rotational arrow RA1 in Fig. 2B. At the abnormal-use state, the relative rotation at the first and the second rotation interfaces 18 and 20 is allowed, thereby allowing the connector coupling member 14 to rotate with respect to the body 12 at the first rotation interface 18 and with respect to the toy coupling member 104 at the second rotation interface 20 as depicted by the rotational arrow RA2 in Fig. 2C, whereas the rotation of the body 12 is restricted (and in some examples, prevented) by an external force F.

It is to be understood herein that the mobile toy 10, the coupler 15, and the connector 100 can be sold in the disassembled state as the toy kit 1 (with the coupler 15 being separate from and couplable to both of the mobile toy 10 and the connector 100, or the coupler 15 being already coupled or fixed to one of the mobile toy 10 and the connector 100 and separate from the other one) or in the assembled state as the toy assembly 5. Accordingly, for the purposes of all the examples described in the present description, scope of the term 'fix,' 'fixing,' 'fixed,' or 'fixation' with respect to the coupler 15 and any or both of the connector coupling member 14 and the toy coupling member 104 is to be understood as including coupling or assembling together by a user when the mobile toy, the coupler, and the connector are sold as a kit, and including detachably or not detachably (integrally) connected together when the mobile toy, the coupler, and the connector are sold as a toy assembly.

It is to be further understood herein that the coupler 15 can have any of the following configurations with respect to the connector coupling member 14 and the toy coupling member 104:
i) the coupler 15 can be integrally formed with the connector coupling member 14 so as to be rotatably coupled thereto, whereas the coupler can be statically couplable (in case sold as a kit) or statically coupled (if sold as a toy assembly) to the toy coupling member 104;
ii) the coupler 15 can be integrally formed with the toy coupling member 104 so as to be statically coupled thereto, whereas the coupler can be rotatably couplable (in case sold as a kit) or rotatably coupled (if sold as a toy assembly) to the connector coupling member 14;
iii) the coupler 15 can be integrally formed with the connector coupling member 14 so as to be statically coupled thereto, whereas the coupler can be rotatably couplable (in case sold as a kit) or rotatably coupled (if sold as a toy assembly) to the toy coupling member 104;
iv) the coupler 15 can be integrally formed with the toy coupling member 104 so as to be rotatably coupled thereto, whereas the coupler can be statically couplable (in case sold as a kit) or statically coupled (if sold as a toy assembly) to the connector coupling member 14;
v) the coupler 15 can be unitarily formed with the connector coupling member 14 (i.e., the coupler 15 constitutes a portion of the connector coupling member 14), whereas the coupler can be rotatably couplable (in case sold as a kit) or rotatably coupled (if sold as a toy assembly) to the toy coupling member 104; and
vi) the coupler 15 can be unitarily formed with the toy coupling member 104 (i.e., the coupler 15 constitutes a portion of the toy coupling member 104), whereas the coupler can be rotatably couplable (in case sold as a kit) or rotatably coupled (if sold as a toy assembly) to the connector coupling member 104.

In the configurations i, ii, and vi, the second rotation interface 20 can be between the connector coupling member 14 and the coupler 14, and in the configurations iii, iv, and v, the second rotation interface 20 can be between the coupler 14 and the toy coupling member 104.

In addition to the above-described configurations, in a configuration, the coupler 15 can be formed as two parts rotatably connected (detachably or not detachably) to each other, and each statically couplable (in case sold as kit) or statically coupled (in case sold as toy assembly) to one of the connector coupling member 14 and the toy coupling member 104. In such a configuration, the second rotation interface 20 can be between the two parts rotatably connected to each other. In some examples, the two parts can be integrally formed, and in other examples, the two parts can be couplable (detachably or not detachably) by the user.

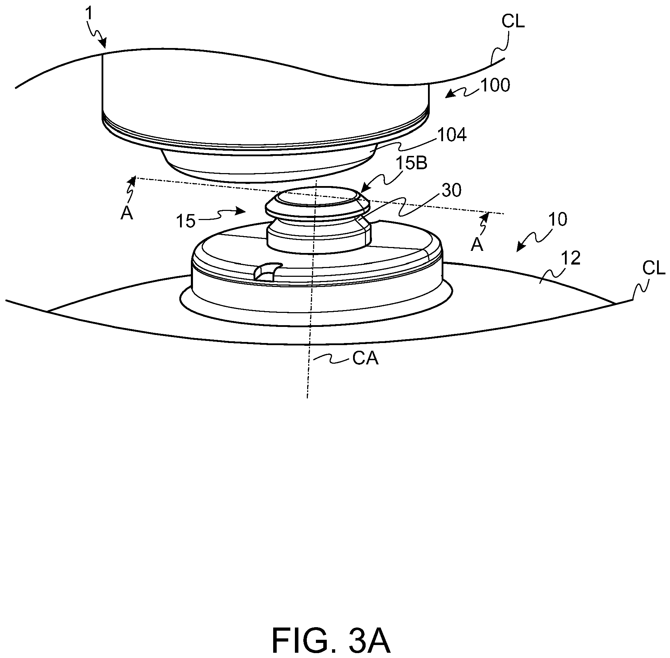

Reference is now made to Figs. 3A to 3F illustrating a toy kit 1 according to various examples of the presently disclosed subject matter. It is to be understood herein that the kit and its components according to the examples illustrated in Figs. 3A to 3F have been designated by same reference numeral as that of the kit and its corresponding components according to the example illustrated in Fig. 1A and 2A for the purposes of consistency and clarity, however, the kit and its components according to the example illustrated in Figs. 3A to 3F can have different structures than the kit and its corresponding components according to the example illustrated in Fig. 1A and/or 2A. The toy kit 1 according to the example illustrated in Figs. 3A to 3F, includes a mobile toy, generally designated as 10 and a connector, generally designated as 100, for suspending thereby the mobile toy 10 from a target (not shown) being couplable to each other to constitute a toy assembly 5. The toy assembly 5, the mobile toy 10, and the connector 100 of the kit 1 according to any of the examples illustrated in Figs. 3A to 3F can include some or all of the above-described features of the toy assembly 5, the mobile toy 10, and the connector 100 respectively of the kit 1 according to any of the examples illustrated in Fig. 1A and 2A, and the description thereof applies to the toy assembly 5, the mobile toy 10, and the connector 100 of the kit 1 according to any of the examples illustrated in Figs. 3A to 3F.

It is to be understood herein that although in the examples illustrated in Figs. 3A to 3F, the coupler 15 has been shown as being already connected to the connector coupling member 14, in general the coupler 15 can be separate from the connector coupling member 14, as described above with respect to the example illustrated in Fig. 2A or can have any of the configuration described above with respect to the coupler 15 with reference to the example illustrated in Fig. 2A. In the illustrated example, the coupler 15 is connected to the connector coupling member 14 via the threads 17 of the coupler 15 and the corresponding threads 19 of the connector coupling member 14. In other examples, the coupler 15 can be connected to the connector coupling member 14 via any suitable connection arrangement described above with respect to the connection between the coupler and the connector coupling member with reference to Figs. 2A to 2C.

It is to be understood herein that Figs. 3A to 3F illustrate only portions of the mobile toy 10 and the connector 100 being cut along the virtual cutting lines CL. The portions that are not shown can be understood as having any suitable structure according to any of the examples described herein or any suitable structure of conventionally known mobile toys and connectors.

In general, the body 12 can comprise an upper portion having a mobile toy opening, in which a bottom portion of the connector coupling member can be at least partially positioned while being rotatably connected to a rim of the opening. An upper portion of the connector coupling member can be connected to the first portion 15A of the coupler 15 while the second portion 15B of the coupler 15 can be rotatably couplable (in case the mobile toy and connector are to be sold as a toy kit) or rotatably coupled (in case the mobile toy and connector are to be sold as a toy assembly) to a lower portion of the toy coupling member 104. An upper portion of the toy coupling member 104 can be statically connected to a connector body.

In the examples illustrated in Figs. 3A to 3F, the body 12 comprises the upper portion, designated as 22, having the mobile toy opening, designated as 24. The bottom portion, designated as 26, of the connector coupling member 14 has a flange 26A extending in a direction perpendicular to the central axis CA. A rim 24A of the mobile toy opening 24 is positioned on the flange 26A and is slidingly engaged with the flange 26A thereby rotatably connecting the body 12 and the connector coupling member 14. The rim 24A and the flange 26A can slide with respect to each other thereby defining the first rotation interface 18 therebetween allowing the rotation of the body 12 with respect to the connector coupling member 14 during the normal-use state and the rotation of the connector coupling member 14 with respect to the body 12 during the abnormal-use state of the toy assembly constituted by assembling the mobile toy 10 and the connector 100. It is to be understood herein that the description provided above with respect to the normal-use state and the abnormal-use state with reference to the toy assembly 5 according to the examples illustrated in Figs. 1B, 1C, 2B, and 2C applies to the normal-use state and abnormal-use state with reference to the examples illustrated in Figs. 3A to 3E.

The upper portion, designated as 28, of the connector coupling member 14 is statically connected via threads 17 and 19 to the first portion 15A of the coupler 15, and the second portion 15B of the coupler extends outwardly from the mobile toy opening 24 for being fixed, for example upon being assembled into the toy assembly, to the lower portion, designated as 106, of the toy coupling member 104. The second portion 15B of the coupler 15 and the lower portion 106 of the toy coupling member 104 constitutes a snap-fit connection arrangement. In the illustrated example, the second portion 15B of the coupler 15 comprises a recess 30 for receiving therewithin snap elements 108 formed at the lower portion 106 of the toy coupling member 104. The lower portion 106 of the toy coupling member 104 has a connector opening 110 for receiving therethrough the second portion 15B of the coupler 15 allowing the coupler 15 to be coupled with the toy coupling member 104. The snap elements 108 are flexible and shaped so as to move in a direction extending perpendicular to the central axis CA by an axial (along the central axis CA) force applied thereupon by the second portion 15B of the coupler 15 during coupling, to thereby be received in the recess 30 and snap-fittingly coupled to the coupler 15.

The upper portion, designated as 112, of the toy coupling member 104 is statically connected to the connector body, designated as 101.

The connector coupling member 14, the coupler 15, and the toy coupling member 104 of the examples illustrated in Figs. 3A to 3F are of the kind produced by Fidlock^{®} under the trade name SNAP male M screw low ^{®} and SNAP female M screw^{®}. However, it is to be understood herein that in some examples, the snap elements and the recess can interchange location, or the snap-fit connection can have an entirely different structure as compared to the one illustrated herein.

The coupling between the second portion 15B of the coupler 15 and the lower portion 106 of the toy coupling member 104 defines therebetween the second rotation interface 20 selectively allowing the rotation of the coupler 15 with respect to the toy coupling member 15 during the abnormal-use state and selectively the rotation of the coupler 15 with respect to the toy coupling member 104 during the normal-use state of the toy assembly constituted by assembling the mobile toy 10 and the connector 100.

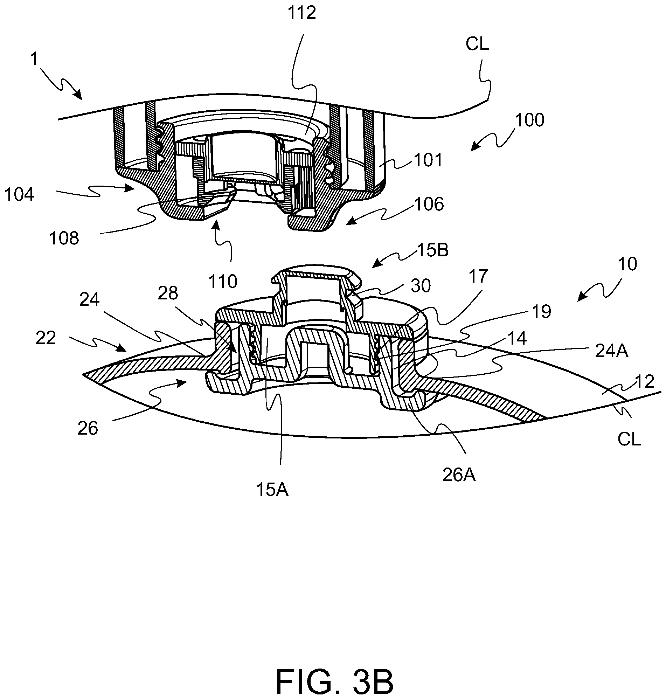

In the example illustrated in Fig. 3B, a friction between the second portion 15B of the coupler 15 and the lower portion 106 of the toy coupling member 104 constitutes the rotation restriction mechanism, whereas the friction prevents (or at least restricts) the rotation between the coupler 15 and the toy coupling member 104 at the normal-use state, for example until a rotational force greater than the frictional force is applied to rotate the coupler 15 with respect to the toy coupling member 104. It is to be understood herein that although in the illustrated example, the friction constitutes the rotation restriction mechanism, in other examples, the rotation restriction mechanism can have any suitable structure as described in the present description.

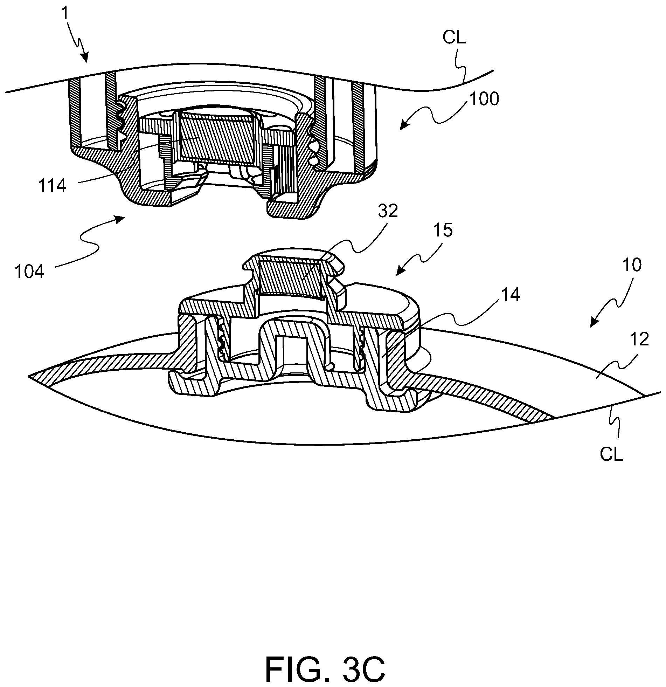

Fig. 3C illustrates an interior of the kit 1 according to yet another example of the presently disclosed subject matter. The kit 1 according to the example illustrated in Fig. 3C is same as the kit 1 according to the example illustrated in Fig. 3B with the only addition being a magnetic coupling arrangement cum rotation restriction mechanism constituted by a first part 32 and a second part 114, together designated as the magnetic arrangement MA constituting the magnetic coupling arrangement as well as the rotation restriction mechanism.

In general, the first part 32 associated with the coupler 15 can be a magnet or can be a magnetic material, and the second part 114 associated with the toy coupling member 104 can be a magnet (if the first part is any one of a magnet or a magnetic material) or a magnetic material (if the first part is a magnet). In other words, the first part and the second part can respectively be any combination out of a magnet and a magnet combination, a magnet and a magnetic material combination, and a magnetic material and a magnet combination. For the purposes of the present description, a magnetic material is to be understood as a material that adheres to or attracts or is attracted towards a magnet.

It is to be understood herein that although in the illustrated example, the first part 32 has been shown as being associated with the coupler 15 and the second part 114 has been shown as being associated with the toy coupling member 104, in some examples, the first part 32 and the second part 114 can be associated one with each of the two elements defining therebetween the second rotation interface.

On one hand, the magnetic arrangement MA constituted by the first part 32 and the second part 114 constitute a magnetic coupling arrangement between the coupler 15 and the toy coupling member 104, whereas the magnetic pull between the first part 32 and the second part 114 assist in coupling the coupler 15 and the toy coupling member 104 when one is brought in proximity to the other along the central axis CA.

On other hand, the magnetic arrangement MA constituted by the first part 32 and the second part 114 constitute a rotation restriction mechanism for selectively restricting (or even preventing) and allowing the rotation of the coupler 15 with respect to the toy coupling member 104. For instance, the magnetic adherence force between the first part 32 and the second part 114 restricts the rotation of the coupler 15 with respect to the toy coupling member 104, for example in the normal-use state of the toy assembly, until a rotational force greater than the magnetic adherence force is applied on the coupler 15, for example in the abnormal-use state of the toy assembly, which is when the rotation restriction mechanism allows the rotation of the coupler 15 with respect to the toy coupling member 104.

Although in the illustrated example, the rotation restriction mechanism has been shown to include a magnetic coupling, it is to be understood herein that in other examples, the rotation restriction mechanism can include a mechanical or an electrical coupling between the two parts. In some examples, the coupling arrangement and the rotation restriction mechanism can be separate or distinct from each other.

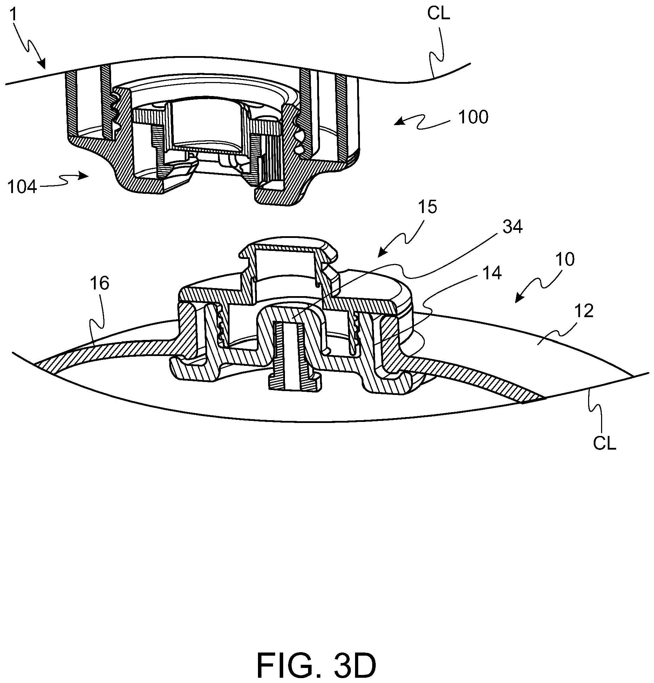

Fig. 3D illustrates an interior of the kit 1 according to yet another example of the presently disclosed subject matter. The kit 1 according to the example illustrated in Fig. 3D is same as the kit 1 according to the example illustrated in Fig. 3B with the only addition being the normally static component 16. It is to be understood herein that all the description provided above with respect to the normally static component 16 with reference to the example of the kit 1 illustrated in Fig. 1A applies to the normally static component 16 of the kit 1 illustrated in Fig. 3D.

In the illustrated example, the connector coupling member 14 comprises a central portion 34, and the normally static component 16 is statically connected thereto. In other examples, the normally static component 16 can be statically connected to any other portion of the connector coupling member 14.

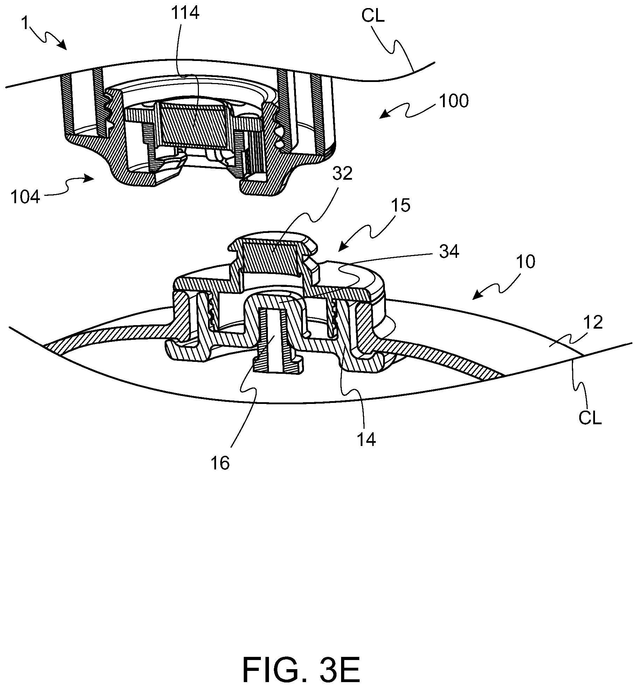

Fig. 3E illustrates an interior of the kit 1 according to yet another example of the presently disclosed subject matter. The kit 1 according to the example illustrated in Fig. 3E is same as the kit 1 according to the example illustrated in Fig. 3C with the only addition being the normally static component 16. In other words, the kit 1 according to the example illustrated in Fig. 3E is same as the kit 1 according to the example illustrated in Fig. 3D with the only addition being the magnetic arrangement MA of the kit 1 according to the example illustrated in Fig. 3C. In yet other words, the kit 1 according to the example illustrated in Fig. 3E is same as the kit 1 according to the example illustrated in Fig. 3B with the two additions being the magnetic arrangement MA of the kit 1 according to the example illustrated in Fig. 3C and the normally static component 16 of the kit 1 according to the example illustrated in Fig. 3D. Accordingly, the kit 1 according to the example illustrated in Fig. 3E includes the features and components of the kit 1 according to the example illustrated in Fig. 3B and the kit 1 according to the example illustrated in Fig. 3C and the kit 1 according to the example illustrated in Fig. 3D, and their corresponding descriptions apply to the kit 1 according to the example illustrated in Fig. 3E.

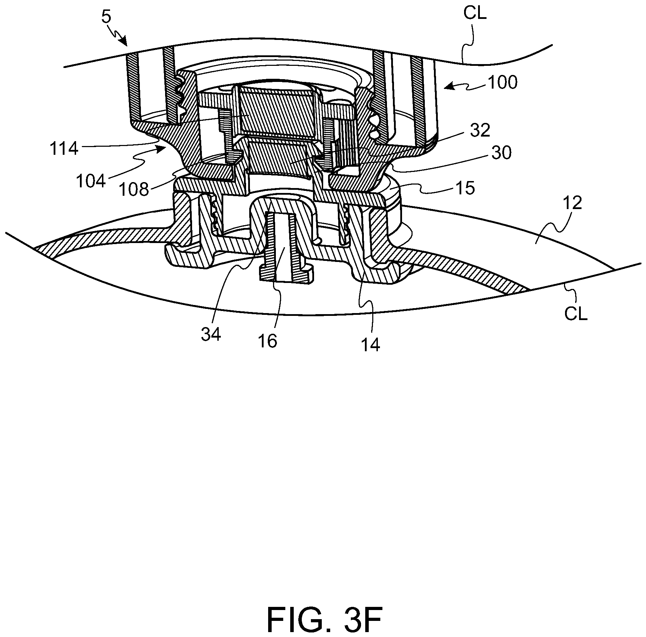

Fig. 3F illustrates the mobile toy 10 and the connector 100 of the kit 1 according to the example illustrated in Fig. 3E, as being assembled to constitute the toy assembly 5.

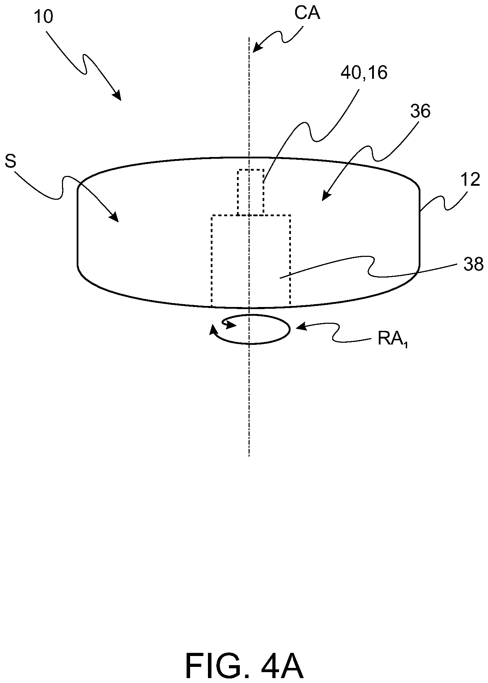

Reference is now made to Figs. 4A to 4E illustrating various examples of the mobile toy 10. It is to be understood herein that the mobile toys and their components according to the examples illustrated in Figs. 4A to 4E have been designated by same reference numerals as that of the mobile toys and their corresponding components according to the examples illustrated in Figs. 1A to 1C, 2A to 2C, and 3A to 3F herein above for the purposes of consistency and clarity, however, the mobile toys and their components according to any of the examples illustrated in Figs. 4A to 4E can have different structures than any of the mobile toys and their corresponding components according to the examples illustrated in Figs. 1A to 1C, 2A to 2C, and 3A to 3F. The mobile toys and their corresponding components according to any of the examples illustrated in Figs. 4A to 4E can include some or all of the above-described features of the mobile toys and their corresponding components according to any of the examples illustrated in Figs. 1A to 1C, 2A to 2C, and 3A to 3F, and the description thereof applies to mobile toys and their corresponding components according to any of the examples illustrated in Figs. 4A to 4E.

In general, the mobile toy 10 according to all of the examples illustrated in Figs. 4A to 4E, is a motorized mobile toy 10 which is detachably attachable to a target so as to be suspendable therefrom in a field of view of a child, in any manner similar to as described herein above or according to any conventional known manner. The mobile toy 10 is operable in a normal-use state in which the body 12 of the mobile toy 10 is rotatable about the central axis CA, and an abnormal-use state in which a force F is applied to the mobile toy, at least indirectly, interfering with the rotation of the body 12 of the mobile toy 10. In general, the description provided above with respect to the normal-use state and abnormal-use state with reference to the mobile toy 10 or toy assembly 5 according to any of the examples of the mobile toy 10 and/or toy assembly 5 described herein applies correspondingly to the normal-use state and abnormal-use state with reference to the mobile toy 10 according to any of the examples illustrated in Figs. 4A to 4E.

The body 12 defines an interior space S having a motor 36 at least partially disposed therewithin. The motor 36 has a motor body 38 and a shaft 40. In general, any one of the motor body 38 and the shaft 40 can be directly or indirectly (via an intermediate component) statically connected to the body 12 to be rotatable together therewith (and not with respect thereto) during the normal-use state of the mobile toy 10. The other one of the motor body 38 and the shaft 40 (i.e., the one not statically connected to the body 12) can rotate with respect to the body 12 during the abnormal-use state of the mobile toy 10.

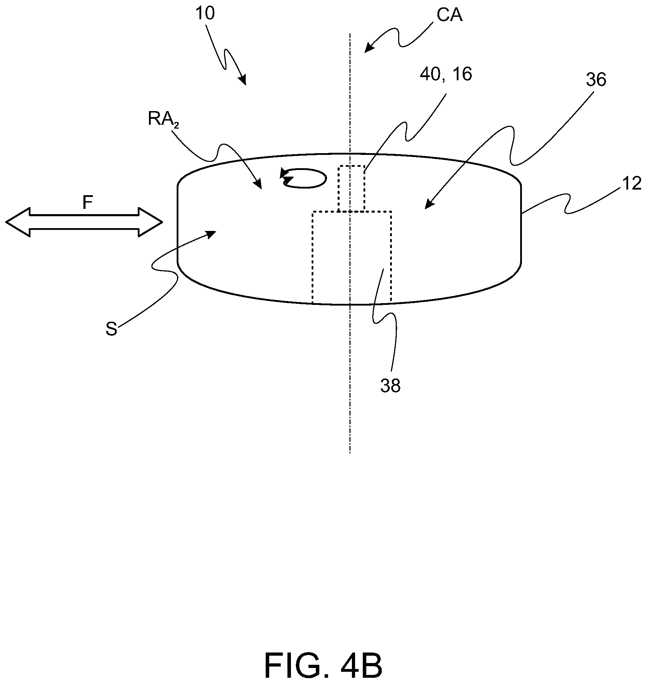

In the example illustrated in Figs. 4A and 4B, the motor body 38 is statically connected to the body 12 and is rotatable therewith depicted by the rotational arrow RA1 during the normal-use state of the mobile toy 10, illustrated in Fig. 4A. During the abnormal-use state of the mobile toy 10, illustrated in Fig. 4B, an external force F is applied on the body 12 that restricts the rotation thereof, and during this stage, the motor body 38 becomes stationary along with the body 12, and the shaft 40 can rotate with respect thereto, as depicted by the rotational arrow RA2. The mobile toy 10 can include at least a part of a rotation restriction mechanism (not shown) according to any of the examples thereof described herein, selectively restricting the rotation of the shaft 40 during the normal-use state of the mobile toy 10.

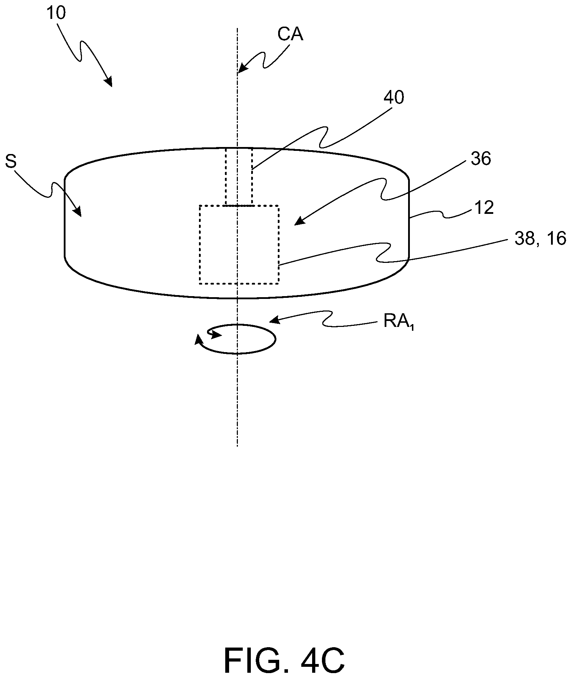

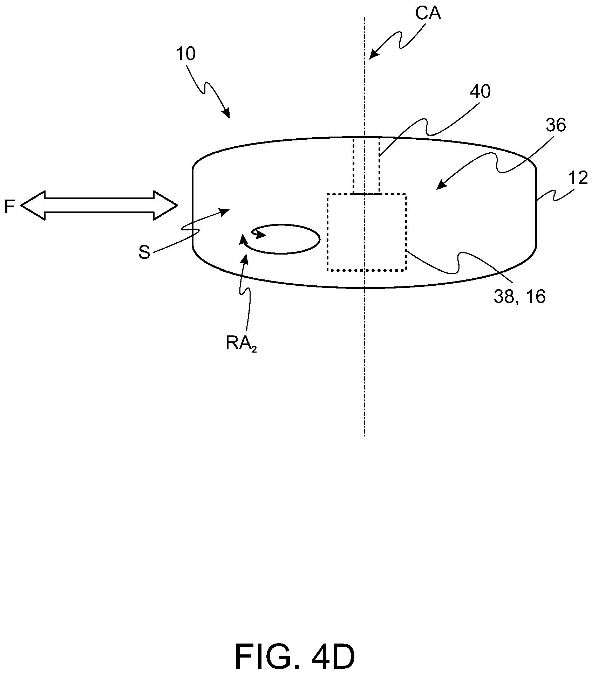

In the example illustrated in Figs. 4C and 4D, the shaft 40 is statically connected to the body 12 and is rotatable therewith depicted by the rotational arrow RA1 during the normal-use state of the mobile toy 10, illustrated in Fig. 4C. During the abnormal-use state of the mobile toy 10, illustrated in Fig. 4D, an external force F is applied on the body 12 that restricts the rotation thereof, and during this stage, the shaft 40 becomes stationary along with the body 12, and the motor body 38 can rotate with respect thereto, as depicted by the rotational arrow RA2. The mobile toy 10 can include at least a part of a rotation restriction mechanism (not shown) according to any of the examples thereof described herein, selectively restricting the rotation of the motor body 38 during the normal-use state of the mobile toy 10.

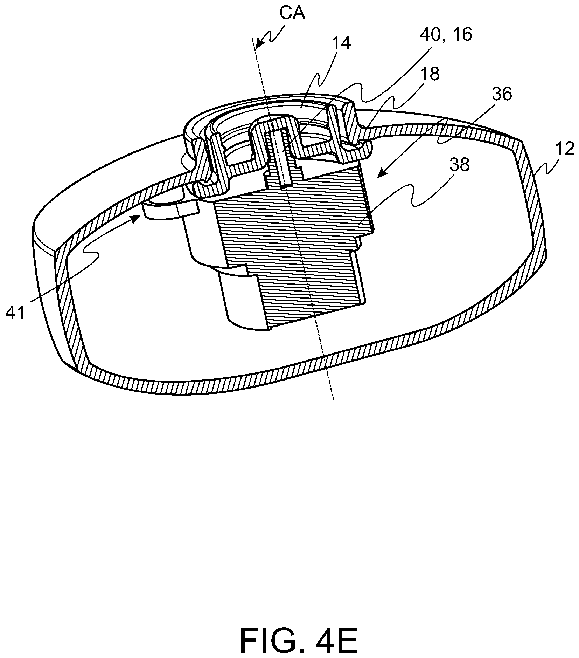

In the example illustrated in Fig. 4E, the motor body 38 is statically connected to the body 12 via the screw 41 and is rotatable therewith during the normal-use state of the mobile toy 10. The shaft 40 is statically connected to the connector coupling member 14, which can be connected to a connector for suspending the mobile toy 10 from a target. The connector can be according to any of the examples of the connector 100 described herein. During the normal-use state of the mobile toy 10, the body 12 rotates together with the motor body 38 with respect to the connector coupling member 14 at the first rotation interface 18. During the abnormal-use state of the mobile toy 10 the rotation of the body 12 is restricted (or even prevented), and the connector coupling member 14 rotates, together with the shaft 40, with respect thereto at the first rotation interface 18. The mobile toy 10 can include at least a part of a rotation restriction mechanism according to any of the examples thereof described herein, selectively restricting the rotation of the connector coupling member 14 and the shaft 40 during the normal-use state of the mobile toy 10.

It is to be understood herein that in the examples illustrated in Figs. 4A, 4B, and 4E, the shaft 40 can constitute the normally static component 16 described herein above with respect to the examples illustrated in Figs. 1A to 1C, 3D, and 3F, and in the examples illustrated in Figs. 4C and 4D the motor body 38 can constitute the normally static component 16 described herein above with respect to the examples illustrated in Figs. 1A to 1C, 3D, and 3F.

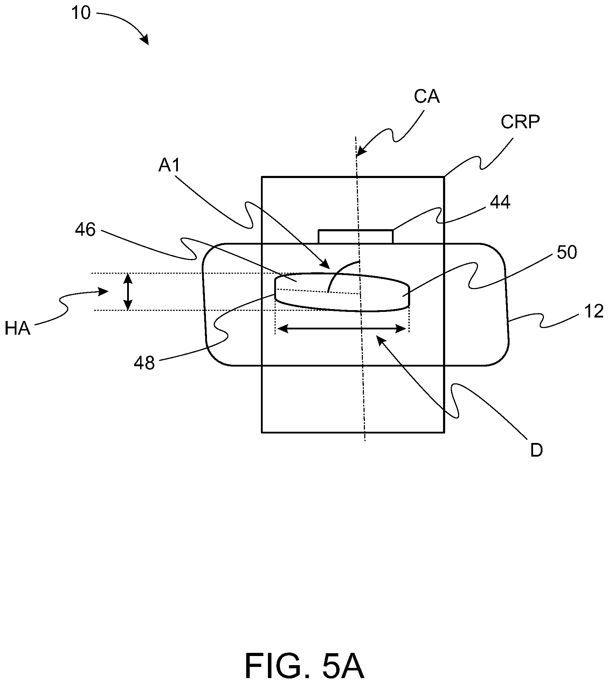

Reference is now made to Figs. 5A to 5E illustrating various examples of the mobile toy 10. It is to be understood herein that the mobile toys and their components according to the examples illustrated in Figs. 5A to 5E have been designated by same reference numerals as that of the mobile toys and their corresponding components according to the examples illustrated in Figs. 1A to 1C, 2A to 2C, 3A to 3F, and 4A to 4E herein above for the purposes of consistency and clarity, however, the mobile toys and their components according to any of the examples illustrated in Figs. 5A to 5E can have different structures than any of the mobile toys and their corresponding components according to the examples illustrated in Figs. 1A to 1C, 2A to 2C, 3A to 3F, and 4A to 4E. The mobile toys and their corresponding components according to any of the examples illustrated in Figs. 5A to 5E can include some or all of the above-described features of the mobile toys and their corresponding components according to any of the examples illustrated in Figs. 1A to 1C, 2A to 2C, 3A to 3F, and 4A to 4E, and the description thereof applies to mobile toys and their corresponding components according to any of the examples illustrated in Figs. 5A to 5E.

In general, the mobile toy 10 according to all of the examples illustrated in Figs. 5A to 5E is attachable to a target, for example via a target connecting member, so as to be suspendable therefrom in a field of view of a child, in any manner similar to as described herein above or according to any conventional known manner. The mobile toy 10 has an upper portion 22 and a lower portion 42 spaced along the central axis CA of the body 12 in a central reference plane CRP thereof. The upper portion 22 has the target connecting member 44 for attachment of the body 12 to a target. It is to be understood herein that the target connecting member 44 can have any suitable structure for detachably or not detachably attaching, either directly or indirectly, the body 12 to a target. In some examples, the target connecting member 44 can be constituted by the connector coupling member 14 according to any of the examples thereof described herein.

According to all of the examples illustrated in Figs. 5A to 5E, the mobile toy 12 comprises an arm 46 having a distal end (or distal end portion) 48 allowing a toy to be connected thereto and a proximal end (or proximal end portion) 50 mounted to the body 12 between the upper portion 22 and the lower portion 42. It is to be understood herein that the toy to be connected to the distal end 48 can be any toy generally and conventionally known to be connected to mobile toys via any generally and conventionally known connection arrangement.

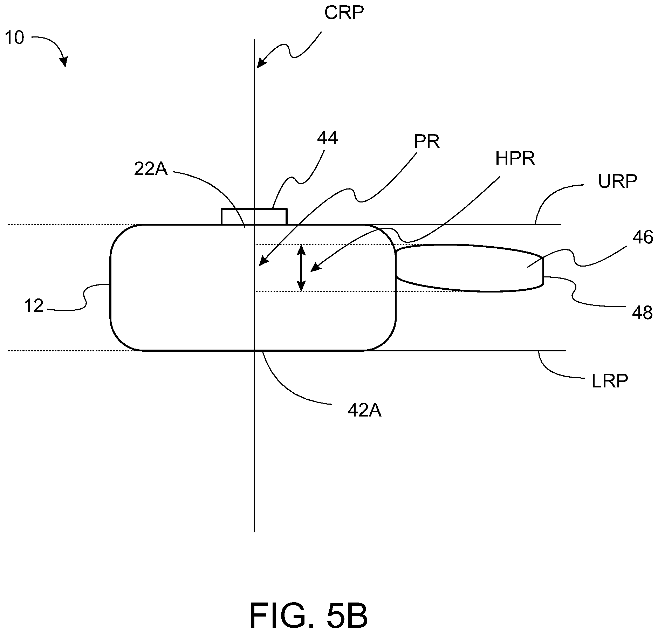

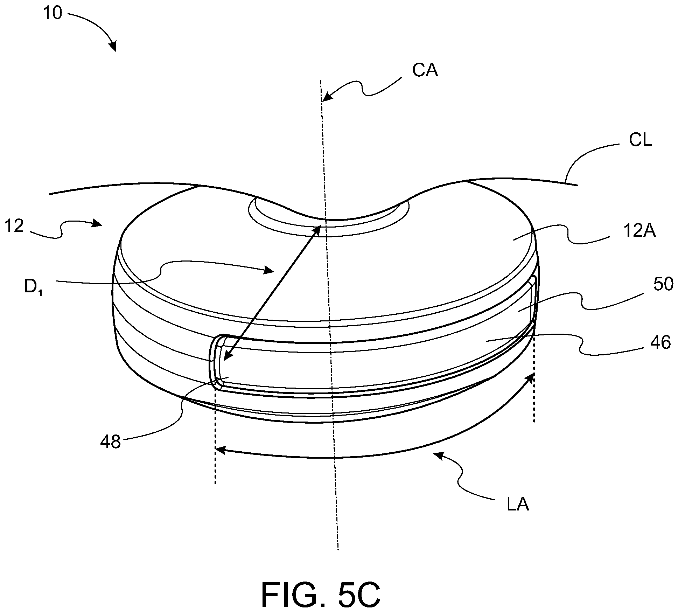

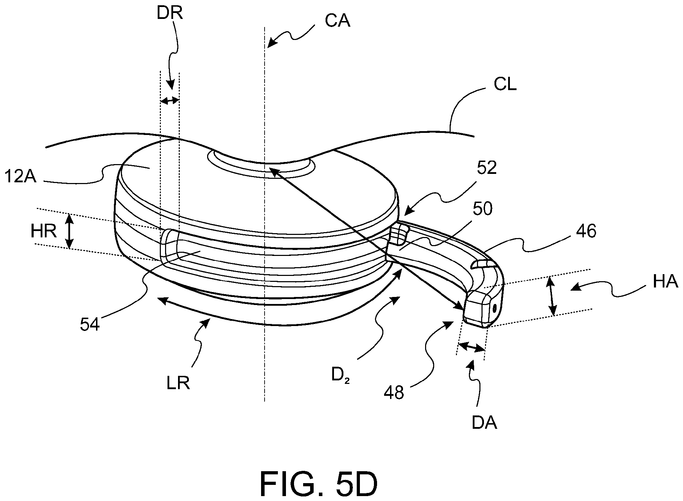

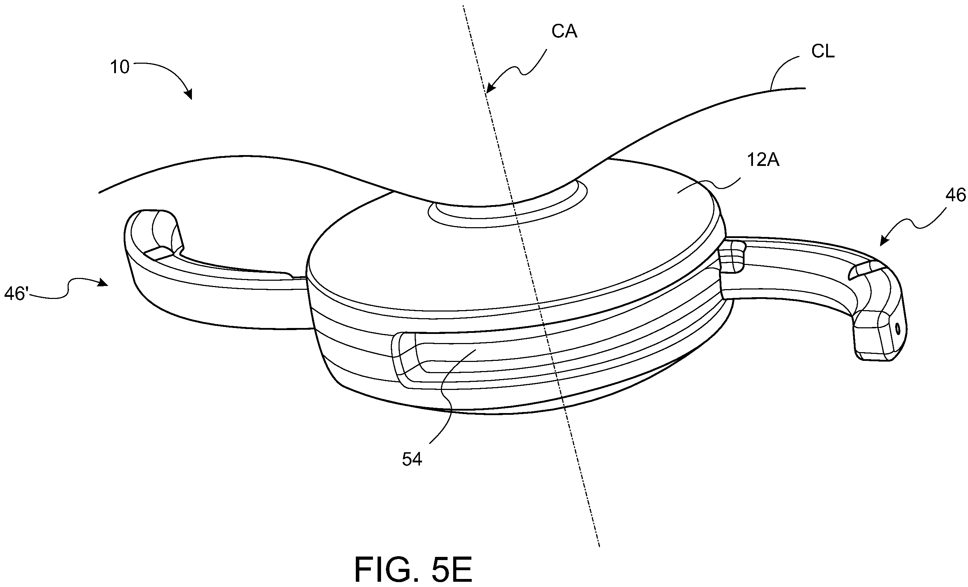

In general, the arm 46 can have any shape and/or orientation with respect to the body 12. For example, the arm 46 can have a curved shape or a straight shape in a plane perpendicular to the central axis CA, and can be oriented perpendicularly or at another angle with respect to the central axis. The arm 46 can be at least partially pivotable between a retracted position, as shown in Figs. 5A and 5C, in which the distal end 48 is located at a first distance D1 (shown in Fig. 5C) from the central axis, and an extended position, as shown in Figs. 5B, 5D, and 5E, in which the distal end 48 is located at a second distance D2 (shown in Fig. 5D) from the central axis CA. The second distance D2 being greater than the first distance D 1. The shape, size, and orientation (for example, the angle A1 shown in Fig. 5A) of the arm 46 relative to the body (or to the central axis CA thereof) is such that, in both of the retracted and extended positions of the arm 46, a height of a projection of the arm 46 on the central reference plane CRP is shorter than a distance between the distal and proximal ends of the arm 46. In some examples, the distance between the distal and proximal ends of the arm 46 can be the shortest distance therebetween, irrespective of whether the arm is straight or curved, and in some examples, the distance between the distal and proximal ends of the arm 46 can be the curved length of the arm when the arm is curved.

It is to be understood herein that in the examples illustrated herein, the arm 46 has been described as being pivotable between the retracted and extended positions, in some examples, the arm 46 can be displaceable between the retracted and extended positions by any movement mechanism other than the pivoting mechanism, for example including linear movement into and out of the body 12.

As can be best seen in the example illustrated in Figs. 5A and 5B, the height HPR of the projection PR (shown in Fig. 5B) of the arm 46 on the central reference plane CPR in its extended position (Fig. 5B) is shorter than the distance D between the distal end 48 and the proximal end 50 of the arm 46. Also, it is clear from Fig. 5A that in the retracted position of the arm 46, the height of the projection of the arm 46 on the central reference plane CRP, which in Fig. 5A extends parallel to the plane of paper and includes the central axis CA, would be equal to the maximum dimension, depicted as height HA, of the arm 46 in a direction along the central axis CA, which is shorter than the distance D between the distal end 48 and the proximal end 50 of the arm 46.

Further, the upper portion 22 has an outermost point 22A in a direction extending along the central axis CA, which lies in an upper reference plane URP, and the lower portion 42 has an outermost point 42A in a direction extending along the central axis CA, which lies in a lower reference plane LRP. As can be best seen in Figs. 5A and 5B, a majority of the arm 46, and particularly the distal end 48, is disposed in between the upper and lower reference planes URP and LRP. The distal end 48 of the arm 46 is disposed above the lower reference plane LRP and below the upper reference plane URP.

In the example illustrated in Figs. 5C and 5D, the proximal end 50 of the arm 46 is connected to the body 12 via a pivot joint 52, and is radially extendable by pivoting about the pivot joint 52. The body 12 has an exterior surface 12A extending around the central axis CA. In general, the exterior surface can have any shape around the central axis, including a continuously curved shape, or a flat shape, or a combination thereof, and can have a variable or constant diameter about the central axis along the length of the central axis. The pivot joint 52 can allow the arm 46 to rotate about the central axis CA.

In the illustrated example, the exterior surface 12A has a continuously curved shape around the central axis CA and a variable diameter about the central axis along the length of the central axis CA. The exterior surface 12A comprises a recess 54 (also referred to herein as arm recess) to at least partially accommodate the arm 46 therewithin when in the retraced position (Fig. 5C) and to allow the arm 46 to protrude therefrom along at least a majority of the length of the arm 46, when in the extended position (Fig. 5D). It is to be understood herein that although the pivot point 52 has been shown as being disposed within the recess 54, in some examples, the pivot point 52 can be positioned partially or fully outside the recess 54, and the corresponding proximal end 50 of the arm 46 can accordingly be outside the recess in both the positions of the arm 46.

In general, the recess 54 has a shape and dimensions corresponding to that of the arm 46 allowing to accommodate the arm 46 within the recess 54 at least along a majority of the arm 46. For instance, as illustrated in Figs. 5C and 5D, the recess 54 is elongated along the circumference of the body 12 and having a length LR along the circumference of the body 12, corresponding to the length LA of the arm 46, a height HR along the central axis CA, corresponding to the heigh HA of the arm 46, and a depth DR perpendicular to the central axis CA, corresponding to the depth DA of the arm 46, so as to be able to accommodate the arm 46 in its entirety when in the retracted position (Fig. 5C). In general, the arm 46 can be accommodated within the recess 54, such that no portion of the arm 46 extends outside the recess 54 when in the retracted position.

In the example illustrated in Fig. 5E, the mobile toy 10 has two arms 46 and 46'. It is to be understood herein that the description provided above with respect to any of the examples of the arm 46 applies to the arm 46'. Further, the mobile toy 10 can have an additional recess (not shown) corresponding to the arm 46', and in such a scenario, the description provided above with respect to any of the examples of the recess 54 applies to that additional recess. It is to be understood herein that the arm 46' and the additional recess (if any) can operate in a manner described according to any of the examples of the arm 46 and recess 54 (in case, there is an additional recess).

In the mobile toy 10 according to any of the examples illustrated in Figs. 5A to 5E, the arm 46 (and/or the arm 46', if any) can be spring loaded to be biased into any of the retracted and extended positions, and can include a retention mechanism to retain the arm in the other of the two positions. Further, the mobile toy 10 can have a trigger mechanism to trigger the release of the arm 46 from the retention mechanism.

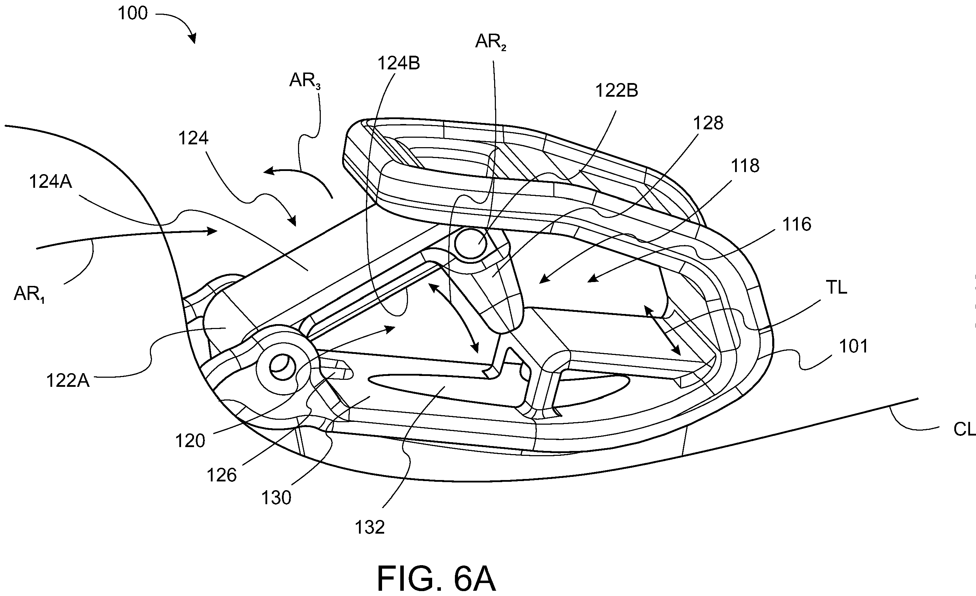

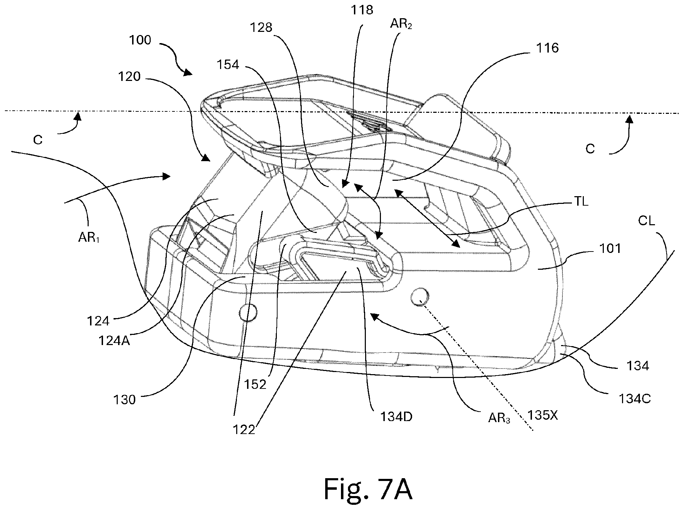

Reference is now made to Figs. 6A to 6G and Figs. 7A to 7H illustrating the connector 100 according to various examples of the presently disclosed subject matter. It is to be understood herein that the connectors and their components according to the examples illustrated in Figs. 6A to 6G and Figs. 7A to 7H have been designated by same reference numeral as that of the connectors and their corresponding components according to the examples illustrated in Fig. 1A to 1C, 2A to 2C, and 3A to 3F for the purposes of consistency and clarity, however, the connectors and their components according to the example illustrated in Figs. 6A to 6G and/or Figs. 7A to 7H can have different structures than the connectors and their corresponding components according to the examples illustrated in Fig. 1A to 1C, 2A to 2C, and 3A to 3F, and in Figs. 7A to 7H and Figs. 6A to 6G, respectively. The connectors and their corresponding components according to any of the examples illustrated in Figs. 6A to 6G and/or Figs. 7A to 7H can include some or all of the above-described features of the connectors and their corresponding components according to any of the examples illustrated in Figs. 1A to 1C, 2A to 2C, and 3A to 3F, and the description thereof applies to the connectors and their corresponding components according to any of the examples illustrated in Figs. 6A to 6G and/or in Figs. 7A to 7H.

It is to be understood herein that Figs. 6A to 6E and Figs. 7A to 7D illustrate only portions of the connector 100 being cut along the virtual cutting lines CL. The portions that are not shown can be understood as having any suitable structure according to any of the examples described herein or any suitable structure of conventionally known connectors to quickly, securely, and detachably attach an external component to a target.

In general, the target can be any target as described above with respect to any of the examples described herein of the kit 1, and the external component can be any component that is to be attached to the target via the connector 100. The connector 100 can include a corresponding external component engaging portion to securely receive and connect thereto the external component. In some examples, the external component can be a mobile toy according to any of the examples of the mobile toy 10 described herein or any other generally and conventionally known mobile toy, and the external component engaging portion can be the toy coupling member according to any of the examples of the toy coupling member 104 described herein. In general, the target can have a trappable portion having a length and two dimensions (for example, height and width) generally perpendicular thereto.

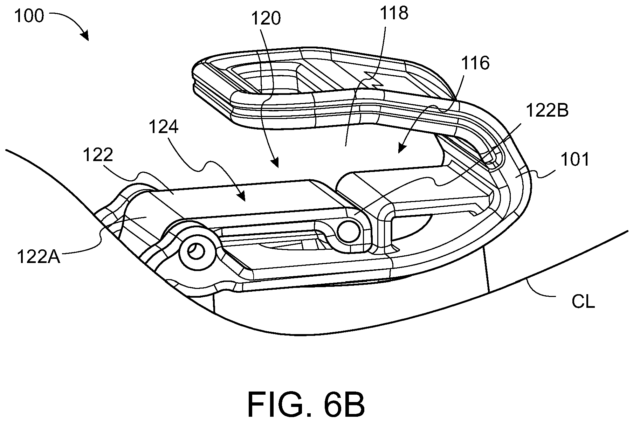

Figs. 6A and 6B illustrate a portion of the connector 100 according to an example of the presently disclosed subject matter, and Figs. 7A to 7D illustrate a portion of the connector 100 according to another example of the presently disclosed subject matter. In general, the connector 100 can have a trapping space having a shape and dimensions corresponding to those of the trappable portion of the target. The trapping space can be formed in any shape and size suitable to receive and retain therewithin the trappable portion of the target. A length of the trapping space can be formed to be shorter than the length (dimension along the length of the trapping space) of the trappable portion, and the trapping space can have an open end through which the trappable portion can be received in a direction generally perpendicular to the length of the trapping space. The connector 100 can further comprise a locking space via which the trapping space can be accessible from an exterior of the connector. The locking space has shape and dimensions so as to allow the trappable portion to be inserted and removed therethrough. The connector 100 further includes a locking member movable within the locking space between an open position in which access to the trapping space from an exterior of the connector via the locking space is allowed and a closed position in which access to the trapping space from the exterior of the connector via the locking space is blocked. The locking member can have any structure suitable to selectively block the access to the trapping space via the locking space, and any suitable mechanism can be used for moving the locking member. In some examples, the locking member can be pivoted between the open and closed positions. In some examples, the locking member can linearly move between the open and closed positions. In some examples the locking member can be constituted by a single component that is movable, while in other examples it can comprise more than one movable component.

The connector 100 further comprises a preventing mechanism for restricting access from the trapping space into the locking space when the locking member is in the closed position. The preventing mechanism can include a blocking element in the form of a barrier or stopper for preventing (or restricting) access from the trapping space into the locking space so that the trappable portion when received in the trapping space can not move into the locking space and hence cannot interfere with the movement of the locking member into the open position from the closed position. In some examples, the barrier can be moveable with the locking member, for example, to allow access to the trapping space from the locking space in the open position of the locking member and to block access to the locking space from the trapping space in the closed position of the locking member. In some examples, the barrier can be connected to the locking member. In some examples, the barrier can be moveably connected to an interior wall of the connector defining at least partially the locking space. In some examples, the barrier can have a variable length. For example, the barrier can have a larger length when the locking member is in its closed position than when the locking member is in its open position.

In the example illustrated in Fig. 6A and 6B, the trapping space, designated as 116, has a length TL, and a trappable portion can be received within the trapping space through the open end, designated as 118, via the locking space, designated as 120, in a direction depicted by arrow AR1 perpendicular to the length TL. The locking member, designated as 122, selectively allows and blocks access to the trapping space 116 via the locking space 120. A first end 122A of the locking member 122 is pivotally connected to the connector body 101 and an opposite second end 122B of the locking member 122 moves within the locking space 120 while following the path depicted by arrow AR2 between the closed position (shown in Fig. 6A) and an open position (shown in Fig. 6B).

In general, the locking member 122 can be biased towards a first direction depicted by arrow AR3 to be in the closed position and to automatically return to the closed position when forced into the open position, by a biasing mechanism having any suitable structure to bias the locking member 122. The locking member 122 can have a target engaging portion having a first surface facing the exterior of the connector 100. The locking member 122 can be moved into its open position by pressing against at least partially along the arrow AR1 on the first surface of the target engaging portion, either by the target during connection thereof with the connector or by a hand of a user.

In the example illustrated in Figs. 6A and 6B, the locking member 122 is constituted by a spring-loaded lever mechanism having the target engaging portion, designated as 124, having the first surface 124A facing the exterior of the connector 100 and the opposite second surface 124B facing the locking space 120. A spring 126 constitutes the biasing mechanism and biases the locking member 122 into its closed position towards the direction depicted by arrow AR3.

The preventing mechanism is constituted by the barrier, designated 128, formed as a protrusion protruding from the second end 122B of the locking member 122. As can be seen in Fig. 6A, at the closed position of the locking member 122, the barrier 128 prevents an access from the trapping space 116 to the locking space 120. Accordingly, the trappable portion of the target cannot move into the locking space 120 from the trapping space 116 and thus cannot interfere with openability of the locking member 122. In some examples, the barrier 128 can be integrally formed or can be formed as a unitary body with the locking member 122.

In the example illustrated in Figs. 6A and 6B, the locking space 120 is defined from one side by an interior wall 130 of the connector 100, and the interior wall 130 has a cavity 132 formed therein for receiving therewithin the barrier 128 at the open position of the locking member 122. For instance, when the locking member 122 is moved into its open position, the second end 122B along with the barrier 128 follows the path depicted by the arrow AR2 and the barrier 128 is received into the cavity 132 (as shown in Fig. 6B) to allow a full and unobstructed access between the trapping space and the locking space to receive the trappable portion into or to remove the trappable portion from the trapping space via the locking space.

The barrier 128 is constituted by the protrusion extending from the second end 122B of the locking member 122, however, in some examples, the barrier can be movably connected to the interior wall 130 of the connector so as to be moveable to selectively allow and block access between the trapping space 116 and the locking space 120.

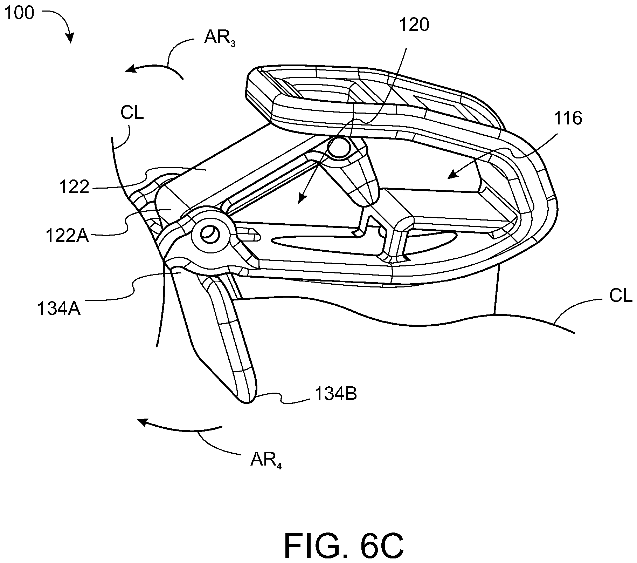

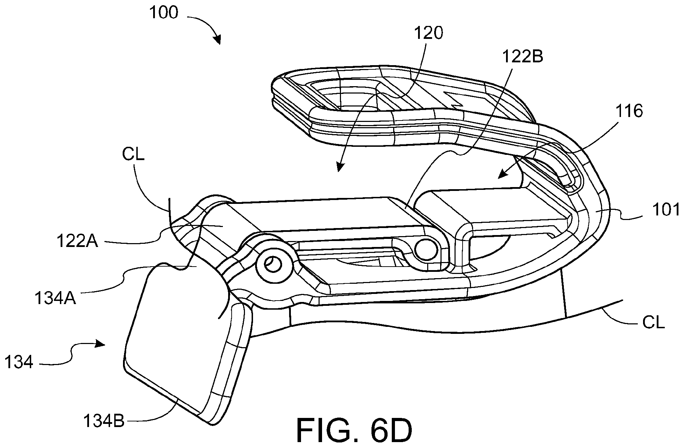

Figs. 6C and 6D illustrate a portion of a connector 100 according to another example of the presently disclosed subject matter. The connector 100 according to the example illustrated in Figs. 6C and 6D is same as the connector 100 according to the example illustrated in Figs. 6A and 6B, and the description thereof applies to the connector 100 according to the example illustrated in Figs. 6C and 6D, with the only addition being a handle portion 134. The handle portion 134 has a handle proximal end 134A connected to the first end 122A of the locking member 122, and a handle distal end 134B urgeable in a second direction, depicted by the arrow AR4, opposite the first direction depicted by the arrow AR3, to move the locking member 122 into the open position (shown in Fig. 6D) from the closed position (shown in Fig. 6C). For instance, a user can hold and press the handle portion 134 towards the second direction, which will cause the locking member 122 to pivot into the open position. In some examples, the handle portion 134 can extend from any other location of the locking member 122 instead of the first end 122B, as shown in the illustrated example.

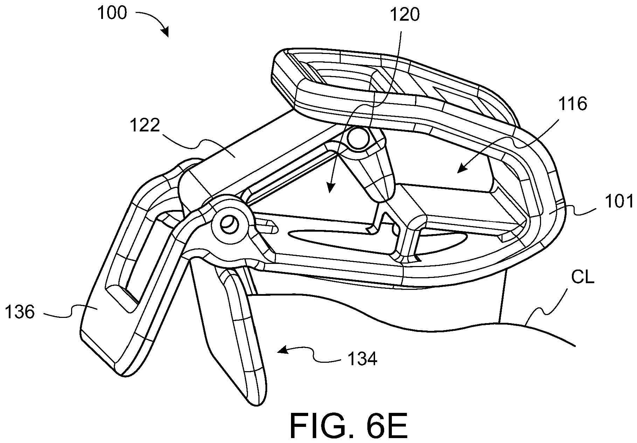

Fig. 6E illustrates a portion of a connector 100 according to another example of the presently disclosed subject matter. The connector 100 according to the example illustrated in Fig. 6E is same as the connector 100 according to the example illustrated in Figs. 6C and 6D, and the description thereof applies to the connector 100 according to the example illustrated in Fig. 6E, with the only addition being a support member. The connector 100 illustrated in Fig. 6E comprises a support member 136 for providing support to a hand of the user while operating the locking member 122, for example via the handle portion 134. It is to be understood herein that the support member 136 can be any rigid member positioned in proximity to the handle portion 134 such that a user can rest a part of the user's hand thereupon while operating the handle portion 134.

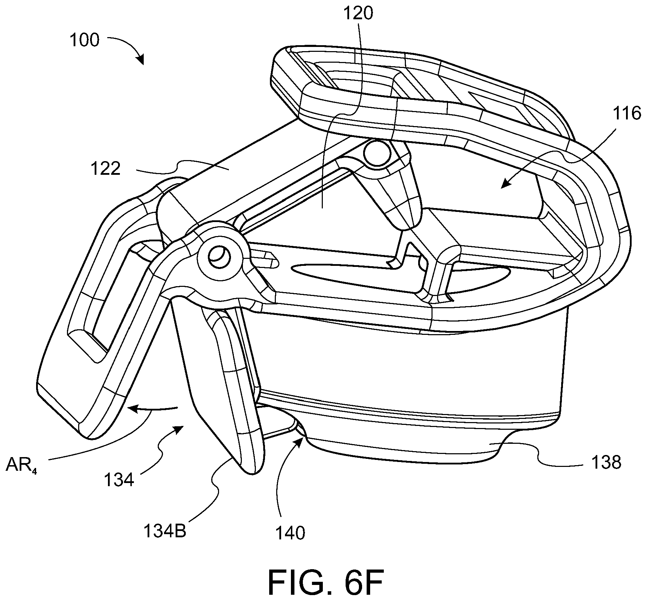

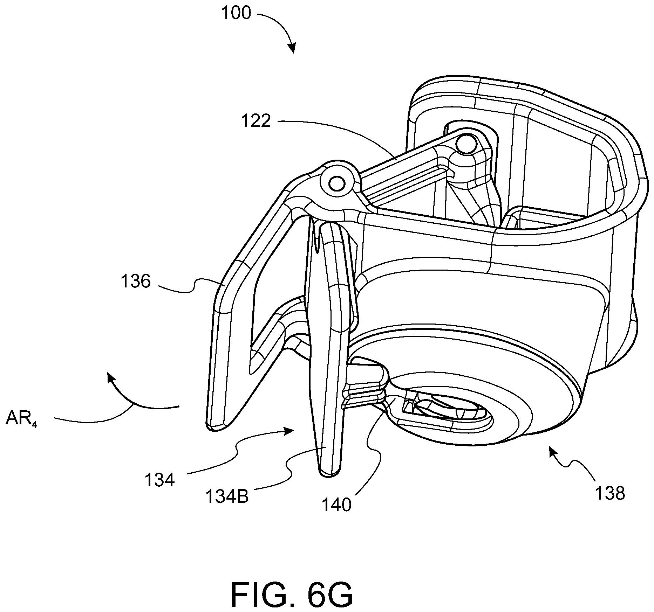

Figs. 6F and 6G illustrate a connector 100 according to yet another example of the presently disclosed subject matter. The connector 100 according to the example illustrated in Figs. 6F and 6G is same as the connector 100 according to the example illustrated in Fig. 6E, and the description thereof applies to the connector 100 according to the example illustrated in Figs. 6F and 6G, with the only difference being that an example of the external component engaging portion 138 being shown in Figs. 6F and 6G.

In general, the external component engaging portion 138 can comprise a slot for removably receiving therethrough an external component, and the connector 100 can comprise a blocking member to selectively allow and block an access through the slot.

In the illustrated example, the slot is designated as 140, and the blocking member is constituted by the handle distal end 134B selectively blocking the access through the slot 140 during the closed state of the locking member 122. For instance, when the locking member 122 is moved into its open position, the handle distal end 134B is urged in the second direction depicted by arrow AR4 away from the slot 140 thereby proving access therethrough for inserting or removing the external component. Accordingly, the external component can be detached from the connector 100 only when the connector 100 is detached or is being detached from the target, thereby minimizing, if not obviating, the risk of accidental detachment of the external component from the connector 100.

In some examples, the blocking member can be separate and independently operable from the handle portion 134.

Reference is now made to Figs. 7A to 7H illustrating the connector 100 according to various examples of the presently disclosed subject matter.

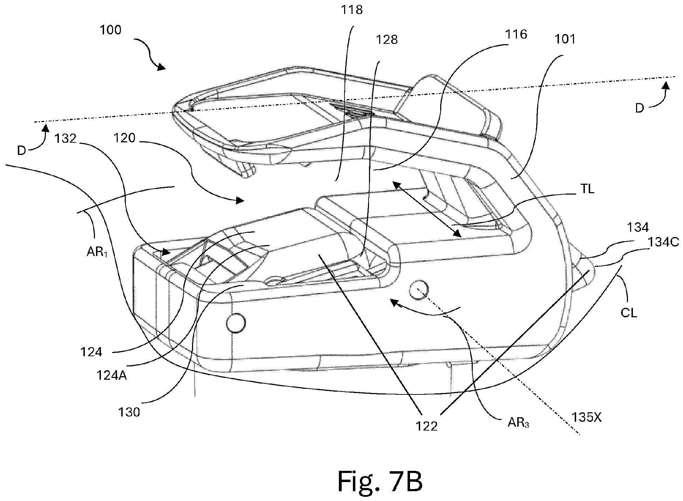

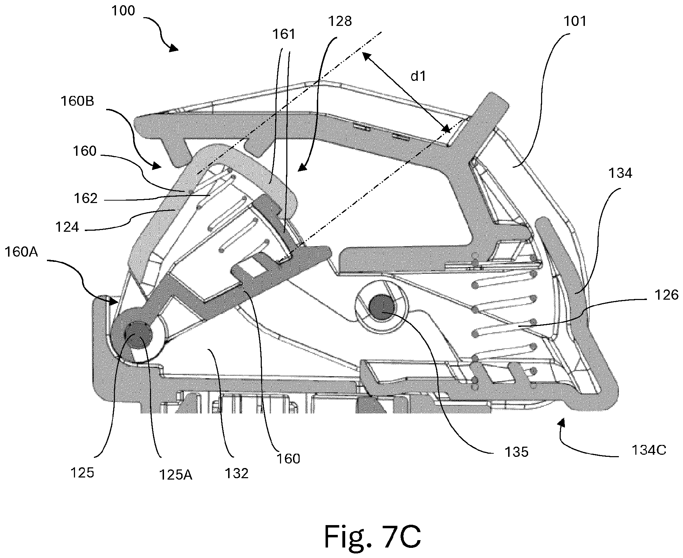

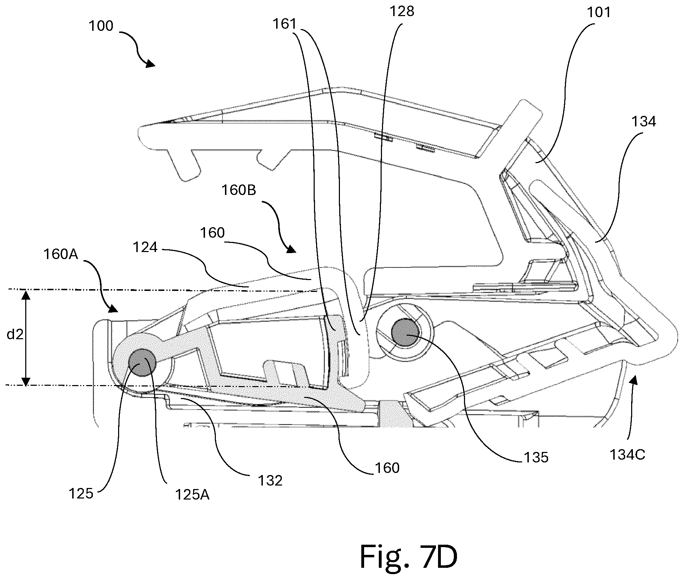

Figs. 7A and 7B illustrate a portion of the connector 100 according to an example of the presently disclosed subject matter, and Figs. 7C and 7D illustrate cross-sectional views taken along lines C-C and D-D of Figs. 7A and 7B, respectively.

The trapping space, designated as 116, has a length TL, and a trappable portion can be received within the trapping space through the open end, designated as 118, via the locking space, designated as 120, in a direction depicted by arrow AR1 perpendicular to the length TL. The locking member, designated as 122, selectively allows and blocks access to the trapping space 116 via the locking space 120.

In a connector according to the presently disclosed subject matter, the handle and the target engaging portion of the spring-loaded mechanism can each be connected to the connector body separately. A connector, according to the presently disclosed subject matter can comprise a target engaging portion pivot mechanism, and the target engaging portion can be pivotable via the target engaging portion pivot mechanism. The connector can further comprise a handle pivoting mechanism allowing pivoting of the handle portion about a handle pivot axis. The handle portion can comprise a handle first end portion, which a user can apply an urging force to, and a handle second end portion operable to move the target engaging portion. When an urging force is applied to the handle first end portion, the handle portion pivots about the handle pivot axis, and the target portion engaging end moves the target engaging portion via an engagement arrangement.

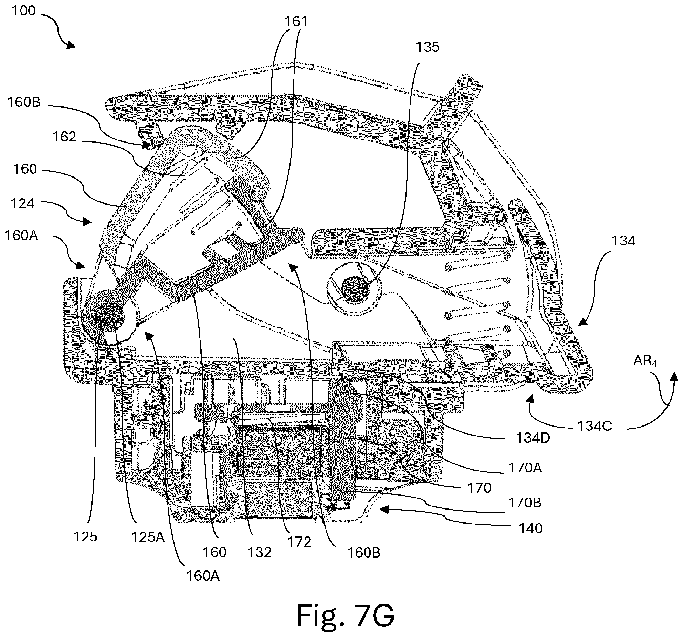

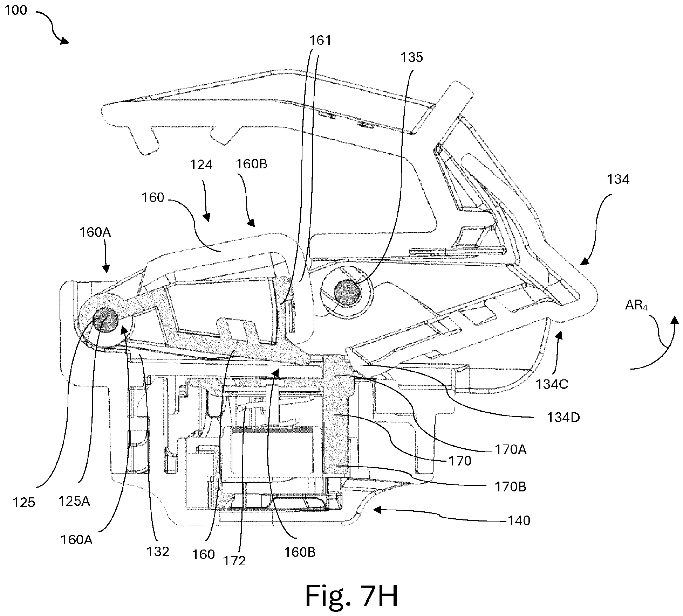

In the example illustrated in Figs. 7A to 7D, the locking member 122 is constituted by a spring-loaded lever mechanism comprising a target engaging portion, designated as 124, having a first surface 124A facing the exterior of the connector 100, and a handle portion 134. The target engaging portion 124 is pivotably connected to a target engaging portion pivot mechanism 125 (shown in Figs. 7C and 7D), constituted by a pivot bar 125A, allowing the target engaging portion to pivot within the connector body 101. The handle portion 134 is connected to the connector body 101 via a handle pivoting mechanism 135, allowing the handle portion 134 to pivot about a handle pivot axis 135X. The connector 100 comprises a biasing mechanism that biases the spring-loaded lever mechanism in a first direction, depicted by arrow AR3, towards the closed position (shown in Fig. 7A), and the spring-loaded lever mechanism automatically returns to the closed position when forced into the open position (shown in Fig. 7B), at least partially by a spring 126 (shown in Figs. 7C and 7G, not shown in Figs. 7D or 7H) that constitutes a part of the biasing mechanism. The handle portion 134 includes a handle first end portion 134C, which a user can apply an urging force to, and a handle second end portion 134D, which is operable to move the target engaging portion 124. When an urging force is applied to the handle first end portion 134C, the handle portion pivots about the handle pivot axis 135X, causing the handle second end portion 134D (seen in Fig. 7A) to move the target engaging portion 124. As a result, the spring-loaded lever mechanism is movable into the open position (shown in Fig. 7B) by pressing at least partially along the arrow AR1 on the first surface 124A, either by the target during connection with the connector or by a hand of a user. At least a part of the target engaging portion 124 moves within the locking space 120 while following the path depicted by arrow AR2 between the closed position (shown in Fig. 7A) and the open position (shown in Fig. 7B).

In some examples of the presently disclosed subject matter, the locking member can be constituted by a spring-loaded lever mechanism. The target engaging portion and the handle portion of the spring-loaded lever mechanism can be separate components engaged with each other via an engagement arrangement. The engagement arrangement can be designed to facilitate coordinated movement between the handle and target engaging portions. In some examples, the engagement arrangement may allow rotation or movement of one component to move or rotate the other component in the same direction. Alternatively, the engagement arrangement may allow rotation or movement of one component to move or rotate the other component in a different direction. In further examples, the engagement arrangement may allow the rotational movement of one component to cause linear movement of the other component, or the linear movement of one component to cause rotation movement of the other component.

The engagement arrangement can comprise a plurality of engagement elements disposed on the connector. In some examples, at least one first and second engagement element can be disposed on the handle and the target engaging portion respectively, and a third engagement element can be disposed on the connector body. The first and second engagement elements can each interact directly with the third engagement element and indirectly with each other to facilitate coordinated movement between the handle and target engaging portions.

In other examples, the engagement arrangement can comprise a first engagement element on the handle portion and a second engagement element on the target engaging portion, and the engagement elements can be operable to engage each other and be moveable with respect to each other. For example, in some examples the first engagement element can be a cam surface on the handle portion, while the second engagement element can be a follower pin on the target engaging portion. As the handle rotates, the cam surface may guide the follower pin, causing both components to rotate in the same direction. In other examples, the engagement elements can include interlocking gears, where a rotation of one component in one direction causes the other component to rotate in the opposite direction due to the gear interaction.

In further examples, the engagement arrangement may incorporate a sliding mechanism, such as a mating protrusion and groove configuration. In such examples, the first engagement element can comprise one or more of either mating protrusions or grooves, and the second engagement element can comprise one or more of the other of mating protrusions and grooves. More particularly, in some examples the first engagement element can comprises one or more grooves, and the second engagement element can comprise one or more mating protrusions, the mating protrusions being slidable within said grooves.

In the example illustrated in Figs. 7A and 7B, the connector 100 comprises an engagement arrangement 150, for facilitating coordinated movement between the handle portion 134 and the target engaging portion 124. The engagement arrangement 150 includes a first engagement element constituted by two mating protrusions 152 located on the handle portion 134 and a second engagement element constituted by two corresponding grooves 154 positioned on the target engaging portion 124. Each mating protrusion 152 is designed to slide within one corresponding groove 154, providing a controlled interaction between the handle portion 134 and the target engaging portion 124.

The preventing mechanism is constituted by the barrier, designated 128, formed at least partially as a protrusion protruding from the locking member 122. As can be seen in Fig. 7A, at the closed position of the locking member 122, the barrier 128 prevents an access from the trapping space 116 to the locking space 120. Accordingly, the trappable portion of the target cannot move into the locking space 120 from the trapping space 116 and thus cannot interfere with openability of the locking member 122. In some examples, the barrier 128 can be integrally formed, or can be formed as a unitary body, with the locking member 122. In other examples, locking member can comprise multiple elements and the barrier 128 can be formed by two or more of such elements.

In the example illustrated in Figs. 7A and 7B, the locking space 120 is defined from one side by an interior wall 130 of the connector 100, and the interior wall 130 has a cavity 132 formed therein for receiving therewithin the barrier 128 at the open position of the locking member 122. For instance, when the locking member 122 is moved into its open position, the barrier 128 follows the path depicted by the arrow AR2 and the barrier 128 is received into the cavity 132 (as shown in Fig. 7B) to allow a full and unobstructed access between the trapping space and the locking space to receive the trappable portion into or to remove the trappable portion from the trapping space via the locking space.

In some examples of the presently disclosed subject matter, the target engaging portion can comprise at least two dynamic elements. One of the dynamic elements can comprise the first surface and at least one of the two dynamic elements can be movable with respect to the other one of the two dynamic elements. In some embodiments, each of the dynamic elements can be movable with respect to each other. The two dynamic elements can be biased away from each other, for example by a spring, or by any other appropriate means. In some examples of the presently disclosed subject matter, the barrier can be at least partially constituted by a protrusion extending from at least one of the two dynamic elements. In some examples of the presently disclosed subject matter, the barrier can be at least partially constituted by corresponding protrusions extending from each one of said two dynamic elements.

In some embodiments of the presently disclosed subject matter the connector can comprise a target engaging portion pivot mechanism, each of the two dynamic elements can have a first end portion pivotably connected to the target engaging portion pivot mechanism. Each of the two dynamic elements can have a second end portion spaced from the first portion thereof, the second end portions of the two dynamic elements being spaced from each other by a first distance when the locking member is in the closed position thereof and a second distance greater than the first distance when the locking member is in the open position thereof. For each of the dynamic elements the protrusion thereof can extend from the second end portion thereof. By virtue of movement of the dynamic elements with respect to each other, an effective length of the barrier can change depending on the distance between the second end portions of the dynamic elements.

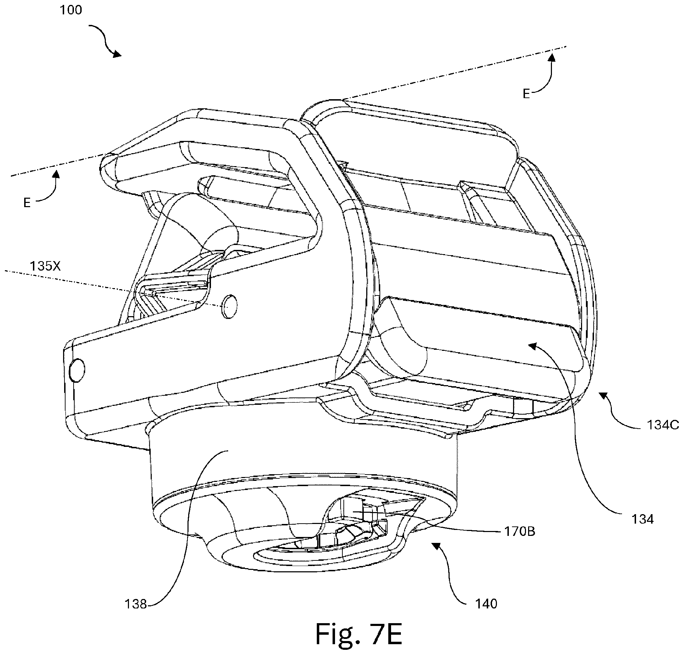

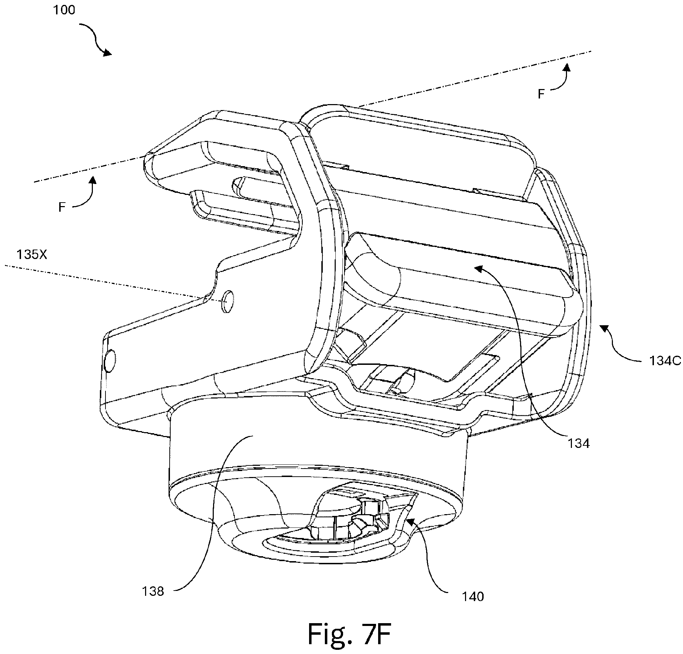

As best seen in Figs. 7C and 7D, the target engaging portion 124 comprises two dynamic elements 160, one of the dynamic elements comprising the first surface 124A. Each of the two dynamic elements 160 have a first end portion 160A pivotably connected to the target engaging portion pivot mechanism 125. Each of the dynamic elements 160 are movable with respect to each other about the target engaging portion pivot mechanism 125. The two dynamic elements 160 are biased away from each other by a spring 162 (shown in Fig. 7C, not shown in Fig. 7D) disposed therebetween. Each of the two dynamic elements 160 have a second end portion 160B spaced from the first portion 160A thereof, the second end portions 160B of the two dynamic elements 160 being spaced from each other by a first distance d1 when the locking member 122 is in the closed position thereof and a second distance d2 greater than the first distance when the locking member is in the open position thereof. A protrusion 161 extends from the second end portion 160B of each dynamic element 160. The barrier 128 is at least partially constituted by the protrusions 161. Figs. 7E and 7F illustrate a connector 100 according to yet another example of the presently disclosed subject matter. The connector 100 according to the example illustrated in Figs. 7E and 7F is same as the connector 100 according to the example illustrated in Figs. 7A to 7D, and the description thereof applies to the connector 100 according to the example illustrated in Figs. 7E and 7F, with the only difference being that an example of the external component engaging portion 138 being shown in Figs. 7E and 7F.

In general, the external component engaging portion 138 can comprise a slot for removably receiving therethrough an external component, and the connector 100 can comprise a blocking member to selectively allow and block an access through the slot.

The blocking member can be movable between an access-allowing position, wherein access through the slot is allowed, and an access-preventing position wherein access through the slot is blocked. The blocking member can be biased towards the access-preventing position thereof. The handle portion can further comprise a blocking member engaging portion operable to selectively move the blocking member towards the access-allowing position when a force is applied thereto. The blocking member engaging portion moves the blocking member towards the access-allowing position thereof when the handle portion is urged to move the locking member into the open position thereof.

More particularly, the blocking member can comprise a handle engaging portion and a blocking portion. The handle portion can comprise a blocking member engaging portion operable to contact the handle engaging portion and bias the blocking member into the access-preventing position thereof, when the locking member is in the closed position thereof. When a force is applied to the handle portion to move the locking member to the open position thereof, the blocking member engaging portion can move, allowing the blocking member freedom to move towards the access-allowing position thereof. The connector can further comprise a spring to bias the blocking member into its access-allowing position, thus when the handle portion is urged to move the locking member into the open position thereof, the blocking end can move to allow access to the slot.

In the example illustrated in Figs. 7E to 7H, the slot is designated as 140 and the blocking member designated 170 has a handle engaging portion engaging end 170A and a blocking end 170B selectively blocking the access through the slot 140 during the closed state of the locking member 122. The handle portion 134 comprises a blocking member engaging portion 134E (seen in Figs. 7G and 7H) operable to contact the handle engaging portion engaging end 170A and move the blocking member 170 towards the access-preventing position thereof (Figs. 7E and 7G) when the handle portion 134 is urged to move the locking member 122 into the open position thereof, wherein the blocking end 170B protrudes into the slot 140. A spring 172 is disposed within the connector to urge the blocking member 170 towards its access-allowing, such that when the locking member is urged in the second direction depicted by arrow AR4 away from the slot 140, the blocking end 170B moves out of the slot 140, thereby proving access therethrough for inserting or removing the external component.

Accordingly, the external component can be detached from the connector 100 only when the connector 100 is detached or is being detached from the target, thereby minimizing, if not obviating, the risk of accidental detachment of the external component from the connector 100.

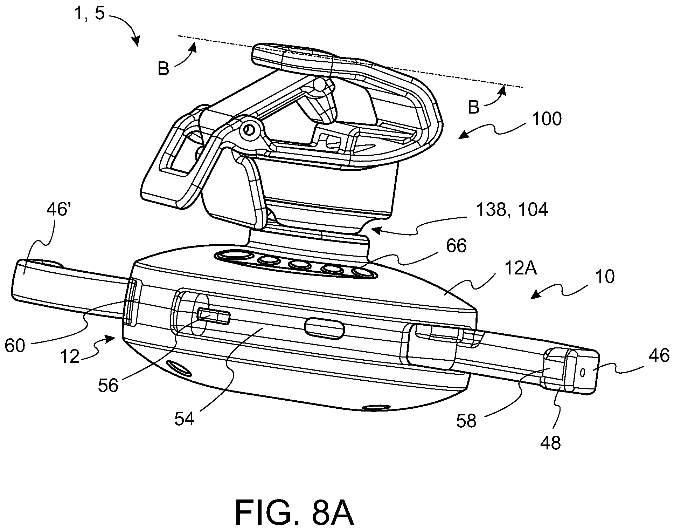

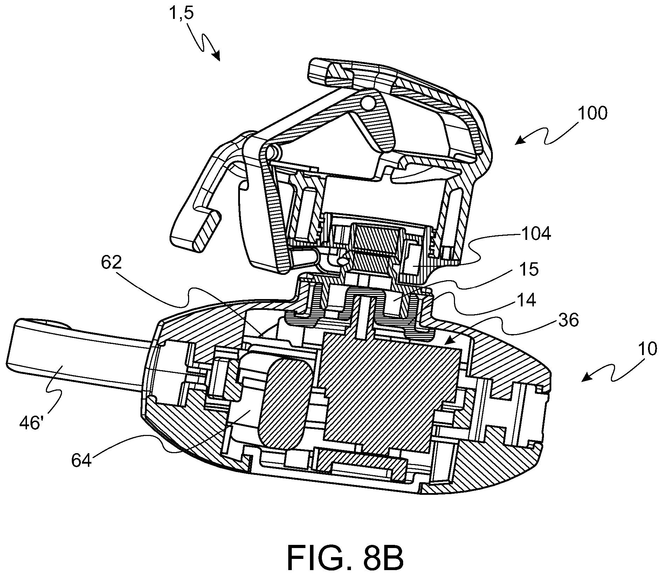

Reference is now made to Figs. 8A and 8B illustrating the kit 1 shown in the assembled state as constituting the toy assembly 5 according to an example of the presently disclosed subject matter. It is to be understood herein that the kit 1 or toy assembly 5 and their components according to the examples illustrated in Figs. 7A and 7B have been designated by same reference numeral as that of the kits, the mobile toys, the connectors, and their corresponding components according to the examples illustrated in Fig. 1A to 1C, 2A to 2C, and 3A to 3F, 4A to 4E, 5A to 5E, and 6A to 6G for the purposes of consistency and clarity, however, the kit 1 or toy assembly 5 and their components according to the example illustrated in Figs. 8A and 8B can have different structures than the kits, the mobile toys, the connectors, and their corresponding components according to the examples illustrated in Fig. 1A to 1C, 2A to 2C, and 3A to 3F, 4A to 4E, 5A to 5E, and 6A to 6G. The kit 1 or toy assembly 5 and their components according to the example illustrated in Figs. 8A and 8B can include some or all of the above-described features of the kits, the mobile toys, the connectors, and their corresponding components according to any of the examples illustrated in Figs. 1A to 1C, 2A to 2C, 3A to 3F, 4A to 4E, 5A to 5E, and 6A to 6G, and the description thereof applies to the kit 1 or toy assembly 5 and their corresponding components according to the example illustrated in Figs. 7A and 7B.

In the example illustrated in Figs. 8A and 8B, the connector 100 includes all the features of the connector 100 described above with reference to Figs. 6F and 6G, and its external component engaging portion 138 being the toy coupling member 104 described above with reference to Figs. 3A to 3F, and accordingly the description of the corresponding components of the connector 100 provided with reference to Figs. 3A to 3F and Figs. 6F and 6G applies to the connector 100 of the example illustrated in Figs. 8A and 8B. The connector illustrated in any of Figs. 7E - 7H can be used interchangeably in the kit 1 with the connector 100 described with reference to Figs. 6F and 6G.

The mobile toy 10 of the example illustrated in Figs. 8A and 8B is a motorized mobile toy and includes all the features of the mobile toys 10 described above with reference to Figs. 3A to 3F, Fig. 4E, and Fig. 5E, and accordingly the description of the corresponding components of the mobile toy 10 provided with reference to Figs. 3A to 3F, Fig. 4E, and Fig. 5E applies to the mobile toy 10 of the example illustrated in Figs. 7A and 7B.

Figs. 8A and 8B illustrate the kit 1 as being assembled into the toy assembly 5, therefore, the coupler 15 has been shown to be fixed to the connector coupling member 14 and the toy coupling member 104, however it is to be understood herein that the connector coupling member 14, the coupler 15, and the toy coupling member 104 can be according to any of the configurations of the coupler 15 described herein above with reference to Figs. 2A to 2C or according to any of the connection arrangements between the connector coupling member 14 and the toy coupling member 104 described herein above with reference to Figs. 1A to 1C.

In the illustrated example, in addition to the above-mentioned features, the mobile toy 10 further comprises a retention mechanism to retain the arm 46 in its retracted position and a trigger mechanism to release the arm 46 from the retention mechanism. In general, the retention mechanism can be positioned within the recess 46 or on the body 12 (in the examples with or without the recess) in proximity to the arm 46. The retention mechanism can include a securing member (such as a hook or equivalents thereof) positioned at one of the body 12 (within or outside the recess, in the examples including the recess) and the arm 46, a securable member (for example to be secured into the securing member) positioned at other one of the body 12 (within or outside the recess, in the examples including the recess) and the arm 46. Any one of the securing member and the securable member can be moveable to selectively retain and release the other one, and the one that is moveable can be biased into a position in which it retains the other one. The trigger mechanism can be operable to move any one of the securing member and the securable member and can accordingly be positioned at the body 12 or the arm 46 to be accessible by a user when the arm is in the retracted position. The trigger mechanism can be a button, a lever member, or any other actuator to move the securing member or the securable member. In some examples, the mobile toy 10 can further comprise a biasing mechanism (for example, a spring or equivalents thereof) for biasing the arm 46 into its extended state. For instance, upon being release from the retention mechanism, the arm can moves into the extended position by virtue of the biasing mechanism.

In the illustrated example, the securing member is formed as a moveable hook 56 to retain the securable member 58 formed on the distal end 48 of the arm 46. The trigger mechanism has been formed as a button 60 formed on the exterior surface 12A of the body 12 to be pressed for moving the hook 56 to release the securable member 58. It is to be understood herein that only the arm 46 (and not the arm 46') has been described herein in detail for the purposes of conciseness of the present description, however, it is to be understood herein that all the description provided above with respect to the arm 46 applies to the arm 46' as well.

Further, the mobile toy 10, according to the illustrated example, includes a controller 62, positioned within the body 12, to control the operation of the motor 36, and a power source 64 to provide power source for the operation of the motor 36. The mobile toy 10 further comprises a control panel 66 positioned on the exterior surface 12A for a user to provide inputs to control the operation of the mobile toy 10, including that of the motor 36. The user can provide inputs via the control panel 66 to control the switching ON and OFF of the motor, to regulate the speed thereof, or any other generally and conventionally known operation of the mobile toy.

## Claims

1. A toy kit comprising a toy mobile having a body, a connector for suspending thereby the toy mobile from a target, and a coupler for facilitating coupling between the toy mobile and the connector, the toy mobile and the connector at least when assembled constituting a toy assembly, in which:
- the toy mobile comprises a connector coupling member fixed to the coupler at a first portion of the coupler;
- the connector comprises a target engaging component detachably and securely attachable to a target so as to have the toy mobile suspend from the target by means of the connector, and a toy coupling member fixed to the coupler at a second portion of the coupler;
- the toy assembly comprises a first rotation interface between the body and the connector coupling member and a second rotation interface between the connector coupling member and the toy coupling member selectively allowing relative rotation therebetween; and
- the toy assembly comprises a rotation restriction mechanism for selectively restricting the relative rotation between the connector coupling member and the toy coupling member at the second rotation interface, the first rotation interface allowing a relative rotation between the body and the connector coupling member at least when the relative rotation between the connector coupling member and the toy coupling member is restricted at the second rotation interface.

2. The toy kit according to Claim 1, wherein the first rotation interface allows a relative rotation between the body and the connector coupling member at least when the relative rotation between the connector coupling member and the toy coupling member is allowed at the second rotation interface.

3. The toy kit according to Claim 2, wherein at least a first part of the rotation restriction mechanism is associated with the toy coupling member and at least a second part of the rotation restriction mechanism is associated with the connector coupling member.

4. The toy kit according to Claim 3, wherein one of the first and second parts of the rotation restriction mechanism comprises a first magnet and the other one of the first and second parts of the rotation restriction mechanism comprises a second magnet or a magnetic material.

5. The toy kit according to any one of Claims 1 to 4, wherein upon being assembled into the toy assembly, the coupler has a coupler first portion fixed thereto the toy coupling member and an opposite coupler second portion fixed thereto the connector coupling member.

6. A toy kit comprising a toy mobile having a body and a connector for suspending thereby the toy mobile from a target, the toy mobile and the connector when assembled constituting a toy assembly which can have a normal-use state in which the body of the toy mobile is rotatable about a central axis thereof, and an abnormal-use state in which a force is applied to the toy mobile, at least indirectly, interfering with, by at least partially restricting, the rotation of the body of the toy mobile, wherein at least when the assembly is assembled:
- the toy mobile comprises a normally static component to be static in the normal-use state of the toy assembly, and a connector coupling member statically connected to the normally static component; and
- the connector comprises:
∘ a target engaging component detachably and securely attachable to a target so as to have the toy mobile suspend from the target by means of the connector, and
o a toy coupling member at least indirectly fixed to the connector coupling member of the toy mobile, the fixation being such as to allow the connector coupling member while staying fixed to the toy coupling member, to rotate together with the normally static component, relative to the toy coupling member in the abnormal-use state of the toy assembly.

7. The toy kit according to Claim 6, the fixation being such as to allow the connector coupling member together with the normally static component to be stationary with respect to the toy coupling member in the normal-use state of the toy assembly.

8. The toy kit according to Claim 6 or 7, wherein the body and the connector coupling member are connected to be rotatable with respect to each other.

9. The toy kit according to Claim 8, wherein the connection allows the body to rotate relative to the connector coupling member in the normal use-state.

10. The toy kit according to any one of Claims 6 to 9, wherein the fixation between the toy coupling member and the connector coupling member is a quick-attachment type.

11. A toy mobile attachable to a target so as to be suspendable therefrom, said toy mobile comprising a body having an upper portion and a lower portion spaced along a central axis of the body in a central reference plane thereof, and at least one arm, said upper portion comprising a target connecting member for the attachment of the body to the target, and said arm having a distal end allowing a toy to be connected thereto, and a proximal end, at which said at least one arm is mounted to said body between the upper and lower portions, said at least one arm being at least partially pivotable between a retracted position, in which said distal end is located at a first distance from said central axis, and an extended position, in which said distal end is located at a second distance from said central axis, which second distance exceeds the first distance, said at least one arm having such shape and orientation relative to the body that, in both positions of the at least one arm, a height of a projection of the arm on the central reference plane is shorter than a distance between the distal and proximal ends of the arm.

12. The toy mobile according to Claim 11, wherein an outermost point of said upper portion lies in an upper reference plane of the body and an outermost point of said lower portion lines in a lower reference plane of the body, and wherein in both the extended and retracted positions of the arm, at least a majority of the arm is disposed in between said upper and lower reference planes.

13. The toy mobile according to Claim 12, wherein in both the extended and retracted positions of the at least one arm, the distal end of the arm is disposed above said lower reference plane.

14. The toy mobile according to Claim 12 or 13, wherein in both the extended and retracted positions of the at least one arm, the distal end of the at least one arm is disposed below said upper reference plane.

15. The toy mobile according to any one of Claims 11 to 14, wherein the proximal end of the at least one arm is connected to a pivot joint, and said at least one arm is radially extendable by pivoting about said pivot joint.

16. The toy mobile according to any one of Claims 11 to 15, wherein the body comprises at least one recess so as to at least partially accommodate the at least one arm when in the retracted position and so as to allow the at least one arm to protrude from the recess along at least a majority of the length of the arm, when in the extended position.

17. The toy mobile according to any one of Claims 11 to 16, wherein said at least one arm is rotatable about the central axis.

18. A motorized toy mobile detachably attachable to a target so as to be suspendable therefrom in a field of view of a child, said toy mobile having a body and being operable in a normal-use state in which the body of the toy mobile is rotatable about a central axis thereof, and an abnormal-use state in which a force is applied to the toy mobile, at least indirectly, interfering with the rotation of the body of the toy mobile, said toy mobile comprising:
an interior space defined by the body of the toy mobile; and
a motor having a motor body and a shaft extending at least partially along the central axis, the motor being at least partially disposed within the interior space, one of the motor body and the shaft being at least indirectly statically connected to the body so as to be rotatable together therewith about the other one of the motor body and the shaft during the normal-use state, and the other one of the motor body and the shaft being rotatable with respect to the body during the abnormal-use state.

19. The motorized toy mobile according to Claim 18, further comprising a connector coupling member for fixing the toy mobile at least indirectly to a connector, said other one of the motor body and the shaft being statically connected to the connector coupling member and rotatable therewith during the abnormal-use state.

20. The motorized toy mobile according to Claim 19, further comprising a rotation interface between the body and the connector coupling member allowing relative rotation therebetween at the normal-use state and the abnormal-use state.

21. The motorized toy mobile according to any one of Claims 18 to 20, further comprising at least partially a rotation restriction mechanism for restricting the rotation of the other one of the motor body and the shaft during the normal-use state.

22. The motorized toy mobile according to any one of Claims 18 to 21, wherein the motor body is at least indirectly statically connected to the body and is rotatable together therewith about the shaft during the normal-use state.

23. The motorized toy mobile according to Claim 22, wherein the shaft is statically connected to the connector coupling member and is rotatable together therewith about the motor body during the abnormal-use state.

24. The motorized toy mobile according to any one of Claims 18 to 23, further comprising at least one arm having a proximal end connected to said body and a distal end allowing a toy to be connected thereto.

25. A connector for quick and secure detachable attachment of an external component to a target having a trappable portion having a length and two dimensions perpendicular thereto, said connector comprising;
- a trapping space having a shape and dimensions corresponding to those of the trappable portion, a length shorter than the length of trappable portion and an open end through which the trappable portion can be received in a direction perpendicular to the length of the trapping portion;
- a locking space via which the trapping space is accessible from an exterior of the connector;
- a locking member movable within the locking space between an open position in which access to the trapping space from an exterior of the connector via the locking space is allowed and a closed position in which access to the trapping space from the exterior of the connector via the locking space is blocked;
- a preventing mechanism for restricting access from the trapping space into the locking space when the locking member is in the closed position; and
- an external component engaging portion operable for securely receiving a corresponding portion of the external component.

26. The connector according to Claim 25, wherein the preventing mechanism comprises a barrier separating the trapping space and the locking space.

27. The connector according to Claim 26, said barrier being moveable along with the movement of the locking member so as to allow access to the trapping space from the locking space during the open position and so as to restrict access from the trapping space to the locking space during the closed position.

28. The connector according to Claim 27, wherein said locking space is at least partially defined by an interior wall of the connector, said interior wall comprising a cavity for receiving therewithin the protrusion at the open position of the locking member.

29. The connector according to any one of Claims 25 to 28, wherein said locking member is constituted by a spring-loaded lever mechanism comprising a target engaging portion having a first surface facing the exterior of the connector, said spring-loaded lever mechanism being biased in a first direction towards the closed position.

30. The connector according to any one of Claims 25 to 29, wherein the external component engaging portion is operable for detachably receiving said corresponding portion of the external component.
